(19) Europäisches Patentamt
European Patent Office
Office européen des brevets

(11) Publication number : **0 409 272 B1**

(12) # EUROPEAN PATENT SPECIFICATION

(45) Date of publication of patent specification : **29.09.93 Bulletin 93/39**

(51) Int. Cl.$^5$ : **C09J 183/06,** C08F 2/50

(21) Application number : **90113970.9**

(22) Date of filing : **20.07.90**

(54) **Reaction products as adhesion additives for UV curable compositions and compositions containing same.**

The file contains technical information submitted after the application was filed and not included in this specification

(30) Priority : **21.07.89 US 383821**

(43) Date of publication of application : **23.01.91 Bulletin 91/04**

(45) Publication of the grant of the patent : **29.09.93 Bulletin 93/39**

(84) Designated Contracting States : **DE FR GB NL**

(56) References cited :
**EP-A- 0 029 929**
**EP-A- 0 173 303**
**EP-A- 0 207 319**
**US-A- 2 814 601**

(56) References cited :
**US-A- 4 064 027**
**US-A- 4 364 809**
**US-A- 4 455 205**
**US-A- 4 780 486**
**US-A- 4 824 875**
**US-A- 4 906 695**

(73) Proprietor : **DOW CORNING CORPORATION**
**P.O. Box 1767**
**Midland Michigan 48686-0994 (US)**

(72) Inventor : **Lutz, Michael Andrew**
**1815 Wyllys**
**Midland, Michigan (US)**
Inventor : **Scheibert, Kirsten Andrea**
**291 Genrich Road**
**Sanford, Michigan (US)**

(74) Representative : **Spott, Gottfried, Dr. et al**
**Patentanwälte Spott und Puschmann**
**Sendlinger-Tor-Platz 11**
**D-80336 München (DE)**

EP 0 409 272 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an adhesion additive for ultraviolet radiation curable siloxane compositions, a reaction product consisting essentially of the material obtained by combining and reacting

(A) an alkoxysilicon compound having a general formula

$$(RO)_3Si\text{-}X\text{-}Si(OR)_3$$

in which R is methyl or ethyl and X is a divalent radical selected from the group consisting of $-(CH_2)_n-$ where $\underline{n}$ has a value of from 1 to 10 inclusive and

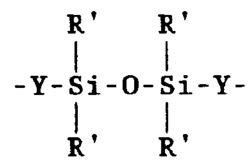

where each R' is independently selected from a group consisting of RO-, an aliphatic hydrocarbon radical and an aromatic hydrocarbon radical, and Y is a divalent radical of the formula $-(CH_2)_n-$ where $\underline{n}$ has a value of from 1 to 10 inclusive and

(B) a polydiorganosiloxane of the formula

$$HO(R''_2SiO)_xH$$

where R" is a monovalent radical independently selected from the group consisting of an aliphatic hydrocarbon radical and aromatic hydrocarbon radical and $\underline{x}$ has an average value of from 5 to 50,

(C) optionally a catalyst for reaction between a $\equiv\overline{SiOR}$ group of (A) and a hydroxyl group of (B),

where the amounts of (A) and (B) are such that the molar ratio of moles of alkoxy in (A) per mole of hydroxy group in (B) is from 2 to 15.

The adhesion additive can be used to make ultraviolet radiation curable siloxane compositions which cure in a few seconds by exposure to ultraviolet radiation and give elastomeric film with excellent unprimed adhesion to various substrates, such as glass and aluminum.

The adhesion additive of the present invention overcame the deficiencies of prior adhesion additives used in the electronics industry. This adhesion additive also provides adhesion to glass optical fibers both in the presence and absence of moisture. The adhesion is observed by the improvement in performance under mechanical, thermal and chemical stress. The adhesion develops at room temperature over a period of time and can be accelerated by heating ultraviolet radiation cured coating compositions containing the adhesion additive.

This invention also relates to an ultraviolet radiation curable siloxane composition comprising (I) a mixture comprising at least one ultraviolet radiation activatable siloxane polymer which will cure when exposed to ultraviolet radiation by forming a crosslinked product and a photoinitiator which is activated by ultraviolet radiation, and (II) the reaction product described hereinbefore as the adhesion additive for ultraviolet radiation curable compositions.

The adhesion additives of the present invention are specifically designed to provide their adhesive characteristics when used in siloxane compositions which are curable by exposure to ultraviolet radiation. The adhesion additive is a reaction product of two ingredients, an alkoxy-silicon compound (A) and a hydroxyl endblocked polydiorganosiloxane (B) in the presence of a catalyst to promote the reaction between the alkoxy groups of (A) and the hydroxyl groups of (B).

The alkoxysilicon compound (A) is a compound of the general formula

$$(RO)_3Si\text{-}X\text{-}Si(OR)_3$$

in which R is methyl or ethyl and X is a divalent radical selected from $-(CH_2)_n-$ where $\underline{n}$ is an integer of 1 to 10, preferably 2, and

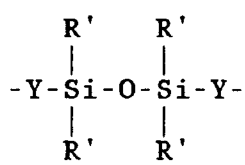

where each R' is independently selected from RO-, an aliphatic hydrocarbon radical and an aromatic hydrocarbon radical, and Y is a divalent radical of the formula $-(CH_2)_n-$ where n has a value of from 1 to 10 inclusive, preferably 2. The alkoxysilicon compound is preferably the compound of the formula

$$(RO)_3Si\text{-}X\text{-}Si(OR)_3.$$

The alkoxysilicon compounds of (A) where X is $-(CH_2)_n-$ can be illustrated by bis(trimethoxysilyl)ethane, bis(trimethoxysilyl)propane, bis(triethoxysilyl)ethane, bis(triethoxysilyl)propane, bis(trimethoxysilyl)butane, bis(trimethoxysilyl)isobutane, bis(triethoxysilyl)hexane and bis(trimethoxysilyl)decane. These compounds can be synthesized by reacting chloroalkyltrialkoxysilane with tetraalkoxysilane in the presence of lithium. Such methods are well known in the art.

The alkoxysilicon compounds in which X has the formula

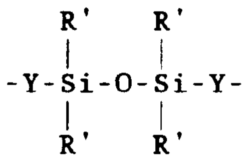

are illustrated by

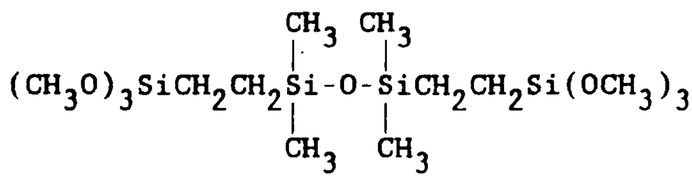

and

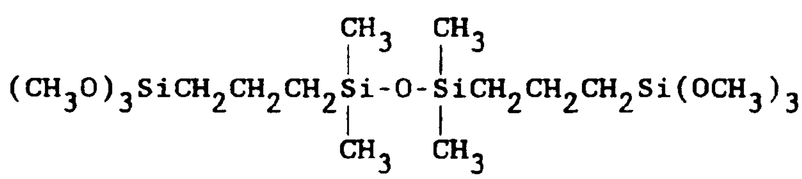

The adhesion additives which provide the best results are those made using bis-(trimethoxysilyl)ethane, which has the formula

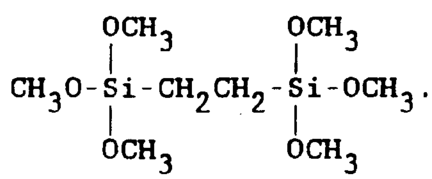

The alkoxysilicon compound of (A) is reacted with a polydiorganosiloxane, (B), having hydroxyl groups on the terminal silicon atoms and has a formula

$$HO(R''_2SiO)_xH$$

where R" is a monovalent hydrocarbon radical, independently selected from aliphatic hydrocarbon radicals, such as methyl, ethyl, vinyl, butyl and hexyl and aromatic hydrocarbon radicals such as phenyl. The preferred R" groups are methyl and phenyl. The polydiorganosiloxane is a low molecular weight polymer having an average value for x of from 5 to 50, preferably from 5 to 15.

The polydiorganosiloxanes of (B) are illustrated by hydroxyl endblocked poly(dimethylsiloxane), hydroxyl endblocked poly(methylphenylsiloxane), hydroxyl endblocked poly(methylvinylsiloxane), hydroxyl endblocked poly-co-(dimethylsiloxane-methylvinylsiloxane) and hydroxyl endblocked poly-co-(dimethylsiloxane-methylphenylsiloxane).

(C) is a catalyst which promotes the reaction between the alkoxy groups of (A), the ≡SiOR groups and the hydroxyl groups of (B) without causing equilibration of the polydiorganosiloxane. The catalyst of (C) can

be a compound for the reaction or, instead of using a catalyst heat can be applied by combining (A) and (B) in a closed container and then heating for a period of time, until the silicon-bonded hydroxyl groups have substantially disappeared.

The compound which acts as a catalyst, ingredient (C), is a compound which causes a reaction between a silicon-bonded alkoxy group of (A) and a hydroxyl group of (B), which can include the organotin compounds and organotitanates. Of the compounds of ingredient (C), the organotitanates are preferred because they provide the optimum adhesion properties. A catalytic quantity of (C) is used, such as 0.1 to 2 weight percent based on the total weight of (A), (B) and (C), preferably from 0.5 to 1.5 weight percent. The reaction between (A) and (B) is preferably carried out by heating.

Ingredient (C) can be an organotin compound such as stannous carboxylates or diorganotin dicarboxylates. Stannous carboxylates can be illustrated by stannous octoate, stannous 2-ethylhexoate, stannous neodecanoate, stannous isooctanoate, stannous isodecanoate and stannous 2'2'-dimethyldecanoate. Diorganotin dicarboxylates can be illustrated by dibutyltin diacetate, dibutyltin dilaurate, dibutyltin dioctoate and dimethyltin dilaurate.

Ingredient (C) can be an organotitanate such as a tetraalkyltitanate which can be illustrated by tetrabutyltitanate, tetraisopropyltitanate, tetramethyltitanate and tetraoctyltitanate or a chelated titanium compound such as those of the formulae

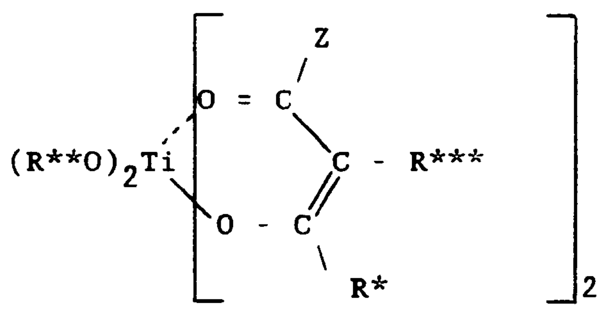

and

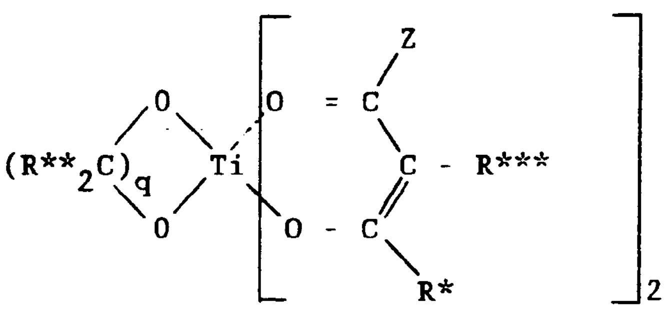

in which R* is an alkyl radical or a $-(CH_2CH_2)-$ bonded to $-(CH_2CH_2)-$ of R***, R** is an alkyl radical or a hydrogen atom, Z is an alkyl radical, an alkoxy radical or amino radical, R*** is an alkyl radical, a hydrogen atom, acetyl radical, or a $-(CH_2CH_2)-$ bonded to the $-(CH_2CH_2)-$ of R*, q is an integer of from 2 to 6 inclusive. Examples of the chelated titanium compounds are diisopropoxy titanium bis-(ethyl acetoacetonate), diisopropoxy titanium bis-(methyl acetoacetonate), diisopropoxy titanium bis-(acetylacetonate), dibutoxy titanium bis-(ethyl acetoacetonate), dimethoxy titanium bis-(methyl acetoacetonate),

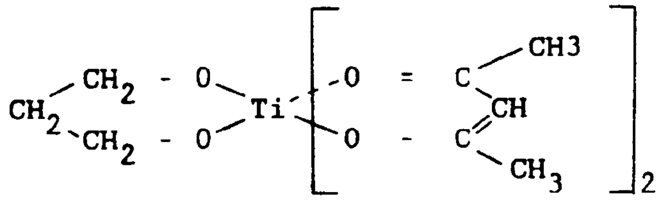

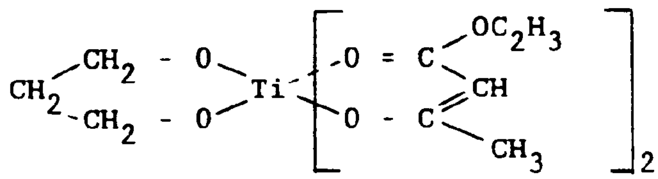

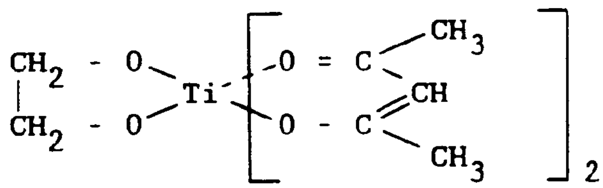

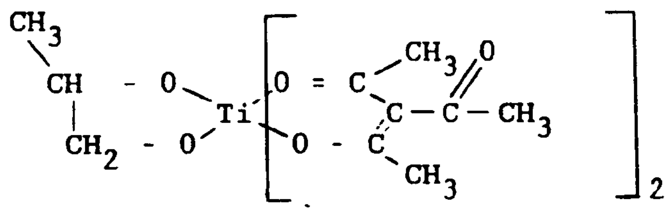

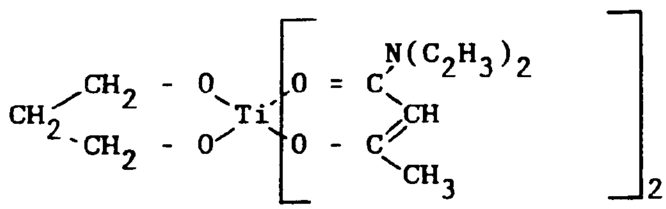

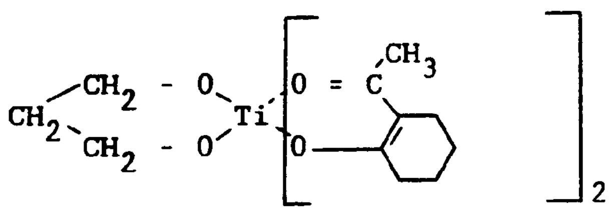

Of the preferred organotitanates, tetrabutyltitanate is the most preferred as ingredient (C).

The reaction between (A) and (B) in the presence of heat or a catalytic amount of a compound is carried out by heating a mixture of (A), (B) and (C) at a temperature of from 50°C. to 90°C. for a sufficient time to essentially eliminate the hydroxyl content of (B), such as from 5 hours to 2 days. The reaction should be carried out under conditions which avoid moisture contact because the alkoxy-silicon compound, titanates and the reaction product are sensitive to moisture. After the reaction is completed, the by-produced alcohol can be removed by stripping under reduced pressure. The reaction product should be stored in a container which prevents the ingress of moisture. Preferably, (A), (B) and (C) are mixed and heated at 60°C. to 80°C. for 10 to 30 hours. The amount of (A) and (B) are such that there is from 2 to 15 moles of silicon-bonded alkoxy of (A) per mole of hydroxyl group in (B), preferably from 5 to 15 moles of alkoxy group of (A) per mole of hydroxyl group of (B).

The adhesion additive is used to promote adhesion in ultraviolet radiation curable siloxane compositions. The degree of adhesion will vary with the amount of adhesion additive used, with the kind of reaction product of the adhesion additive, and with the nature or kind of ultraviolet radiation curable siloxane mixture being used. Preferably, the adhesion additive (II) is used in amounts of from 1 to 15 weight percent based on the weight of mixture (I). The most preferred amounts of adhesion additive used are from 2 to 10 weight percent.

A combination of adhesion additive and ultraviolet radiation curable siloxane composition provides adhesion to substrates when the curable composition is cured in contact with the substrate. The ultraviolet radiation curable siloxane composition of this invention is obtained by mixing (I) and (II). (I) is a composition which cures when exposed to ultraviolet radiation and is based on at least one ultraviolet radiation activatable siloxane polymer and a photoinitiator which is activated by ultraviolet radiation. (II) is the adhesion additive as described above.

Mixture (I) is at least one ultraviolet radiation activatable siloxane polymer which will cure when exposed to ultraviolet radiation and form crosslinked product in the presence of photoinitiator which is activated by ultraviolet radiation. This mixture can contain other siloxane ingredients, organic compounds, reinforcing agents and other compounds which are used with such siloxane compositions.

One curable material which is useful as mixture (I) comprises (a) a vinyl functional polydiorganosiloxane in which there is at least two vinyl functional groups per molecule, (b) a mercapto functional compound having at least two mercapto groups per molecule. In this mixture, the number of vinyl groups per molecule plus the number of mercapto groups per molecule is at least five to obtain satisfactory cure. These curable materials can be illustrated by a preferred embodiment described by Chi-long Lee and Michael A. Lutz in U.S. Patent No. 4,780,486, issued October 25, 1988, application Serial No. 863,672, filed May 15, 1986. These compositions are hereinafter identified as vinyl/mercapto compositions.

The vinyl/mercapto composition comprises a material which is storable in one package, is viscosity stable indicated by the failure of the 25°C. viscosity to double when heated at 100°C. for 24 hours, cures when exposed to ultraviolet radiation of 70 millijoules or less per square centimeter in one second or less where the ultraviolet radiation includes a wavelength of 365 nanometres and is obtained by mixing (i) alkenyl functional, linear triorganosiloxy endblocked polydiorganosiloxane having a degree of polymerization of 30 to 1,000 where each silicon-bonded organic radical is selected from vinyl, methyl, phenyl, 3,3,3-trifluoropropyl, beta-(cyclohexenyl)ethyl, ethyl, cyclohexenyl, allyl, higher alkenyl radicals represented by the formula $A(CH_2)_rCH=CH_2$ wherein A is $-(CH_2)_s-$ or $-(CH_2)_tCH=CH-$, $\underline{r}$ has a value of 1, 2 or 3; $\underline{s}$ has a value of 3 or 6; and $\underline{t}$ has a value of 3, 4 or 5 and silacyclopentenyl and having per molecule at least two silicon-bonded organic radicals selected from vinyl, beta-(cyclohexenyl)ethyl, cyclohexenyl, allyl, higher alkenyl radical and silacyclopentenyl, (ii) mercapto functional crosslinker which is at least one material selected from mercapto functional polyorganosiloxanes and mercapto organic compounds, said mercapto functional polyorganosiloxanes are represented by the general formula

$$A''A'_2SiO(A{*}A'SiO)_z(A'A\hat{}SiO)_vSiA'_2A''$$

wherein each A^ is selected from mercaptoalkyl radicals having from 2 to 6 carbon atoms per radical; each A' is selected from methyl, phenyl, 3,3,3-trifluoropropyl and ethyl; and each A" is selected from the radicals of -OH, A^ and A'; and each A* is selected from methyl and phenyl, on the average there being per molecule at least two mercapto-alkyl radicals, $\underline{z}$ is 0 or greater, $\underline{v}$ is 0 or greater and the amount and kind of organic radicals represented by A^, A', A" and A* being of such a nature as to make (i) and (ii) compatible and said mercapto organic compounds have at least two mercapto groups per molecule, consisting of atoms of sulfur, carbon and hydrogen, and optionally oxygen, having a molecular weight less than 1,000 and being of such a nature as to make (i) and (ii) compatible, (iii) photosensitizer, (iv) storage stabilizer and (v) optionally reinforcing agent, there being in said material from 0.5 to 1.5 total alkenyl radicals per mercapto group.

Polydiorganosiloxane, (i), is substantially linear. The silicon-bonded organic radicals can be vinyl, methyl, phenyl, 3,3,3-trifluoropropyl, ethyl, beta-(cyclohexenyl)ethyl, cyclohexenyl, allyl, higher alkenyl radicals and silacyclopentenyl. (i) should have at least two alkenyl radicals per molecule selected from vinyl, allyl, beta(cyclohexenyl)ethyl, cyclohexenyl, higher alkenyl and silacyclopentenyl. The silicon-bonded organic radicals are preferably combinations of vinyl, methyl and phenyl. The degree of polymerization for (i) is from 30 to 1,000, preferably 50 to 500, repeating siloxane units per average molecule. Preferably, at least 50 percent of the organic radicals are methyl.

The higher alkenyl radicals are particularly useful when it is important to reduce the odor which can be generated in vinyl/mercapto compositions. While the odor emitted upon UV curing is significantly decreased when at least 50 mole percent of the unsaturated radicals are higher alkenyl radicals, it is even more preferred that essentially all the unsaturated radicals be higher alkenyl radicals to further reduce or eliminate the emission of odor. The higher alkenyl radicals include 5-hexenyl, 6-heptenyl, 7-octenyl, 8-nonenyl, 9-decenyl, 10-undecenyl, 4,7-octadienyl, 5,8-nonadienyl, 5,9-decadienyl, 6,11-dodecadienyl and 4,8-nonadienyl. Alkenyl radicals selected from the group consisting of 5-hexenyl, 7-octenyl, 9-decenyl and 5,9-decadienyl are preferred, with the most preferred higher alkenyl being the 5-hexenyl radical.

When higher alkenyl radicals are present in the polydiorganosiloxane of (i), it is preferred that the units be selected from the group consisting of dimethylsiloxane units, trimethylsiloxane units, alkenylmethylsiloxane units, methyl-phenylsiloxane units, diphenylsiloxane units and alkenyldimethylsiloxane units. Examples of siloxane units which form the polydiorganosiloxane (i) of this invention include trimethylsiloxane units, dimethylsiloxane units, 5-hexenyldimethylsiloxane units, 5-hexenylmethylsiloxane units, dimethylvinylsiloxane units, methylvinylsiloxane units, dimethyl-7-octenylsiloxane units, methyl-7-octenylsiloxane units, diphenylsiloxane units, methylphenylsiloxane units, 9-decenyldimethylsiloxane units, 9-decenylmethylsiloxane units, 5,9-decadienyldimethylsiloxane units, 6-heptenylmethylsiloxane units and dimethyl-8-nonenylsiloxane units.

The mercapto functional crosslinker, (ii), can be either a mercapto functional polyorganosiloxane, a mercapto organic compound or mixtures thereof. The mercapto functional crosslinkers are selected such that the polydiorganosiloxane, (i), and mercapto functional crosslinker, (ii), are compatible. The combination of (i) and (ii) are compatible when specific polymers or compounds are combined in the amounts to be used and the resulting mixture does not separate into phases. A cloudy mixture can indicate separate phases and may separate on standing, such combinations are usually not used, however, a cloudy mixture can be used if the storage, viscosity stability and cure properties are met. The selection for compatibility can readily be determined for any specific polymer or compound. Each kind of unit in (i) and its amount will influence the compatibility with (ii) in which its kind and amount will influence the compatibility.

The mercapto functional crosslinker (ii) should have at least two mercapto groups per molecule, preferably the number of mercapto groups in (ii) is three or more. The molecules of (ii) which contain two mercapto groups are used with (i) in which there is a large number of alkenyl groups per molecule, such as 10. Preferably, (ii) has three or more mercapto groups per molecule because present experimental work suggests that faster UV cures can be obtained with this type of composition.

The mercapto functional polyorganosiloxanes of (ii) can be illustrated by the following examples of mercapto functional polyorganosiloxanes containing hydroxyl endgroups, such as hydroxyl endblocked polymethyl-(gamma-mercaptoisobutyl)siloxane and hydroxyl endblocked polymethyl-(gamma-mercaptopropyl)siloxane where these polymers have from 3 to 20 mercapto containing siloxane units. The preferred mercapto functional polyorganosiloxanes of (ii) are those in which the mercapto groups are gamma-mercaptopropyl or mercaptoisobutyl.

The mercapto functional crosslinker, (ii), can also be a mercapto organic compound, especially for compositions which have a refractive index greater than 1.48. These mercapto organic compounds are also known in the art by terms such as "polythiols" and "polymercaptans". These mercapto organic compounds contain at least two mercapto groups (-SH) and consist of atoms selected from sulfur, hydrogen and carbon, and optionally oxygen. Preferably, these mercapto organic compounds contain from 2 to 6 mercapto groups. Some examples are 2,2'-dimercaptodiethylether, dipentaerythritolhexa(3-mercapto-propionate), glycol dimercaptoacetate, glycol dimercapto-propionate, pentaerythritoltetra(3-mercaptopropionate), pentaerythritol tetrathioglycolate, polyethylene glycol dimercaptoacetate of the formula

$$HSCH_2COOCH_2(CH_2OCH_2)_{11}CH_2OOCCH_2SH,$$

polyethylene glycol di(3-mercaptopropionate) of the formula

$$HSCH_2CH_2COOCH_2(CH_2OCH_2)_{11}CH_2OOCCH_2CH_2SH,$$

trimethylolethane tri(3-mercaptopropionate), trimethylolethane trithioglycolate, trimethylolpropane tri(3-mercaptopropionate) and trimethylolpropane trithioglycolate.

The photoinitiator or photosensitizer, (iii), is a compound which will initiate a reaction between alkenyl radicals bonded to silicon atoms and mercaptoalkyl groups when irradiated with ultraviolet light. The photosensitizer is compatible in the composition. Compatibility of the photosensitizer can be determined by mixing the ingredients and the photosensitizing compound in an amount of one weight percent based on the weight of the composition and then mixing for up to 16 hours at room temperature, heating at 80°C. for up to four hours or both. The photosensitizer is said to be compatible if the composition is clear and the photosensitizer has dispersed. Besides compatibility, the photosensitizer should not cause the composition to react undesirably, such as gelling during storage. Some compounds which can be used as photosensitizer are: benzophenone, trimethylsilylated benzophenone, acetonaphthenone, propiophenone, 3-methylacetophenone, 4-methylacetophenone, benzoin ethyl ether, a dimethylpolysiloxane whose two terminals are bonded to benzoin through an ether linkage, acetophenone, benzoin methylether, benzoin isobutylether, 2,2-diethoxyacetophenone,

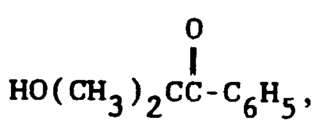

and

$$HO(CH_3)_2C\overset{\overset{O}{\|}}{C}-C_6H_4-C(CH_3)_2H\ .$$

The most preferred photosensitizers are 2,2-diethoxyacetophenone and

$$HO(CH_3)_2C\overset{\overset{O}{\|}}{C}-C_6H_5.$$

Polysilanes are also useful as photoinitiators in the vinyl/mercapto compositions. The polysilane photoinitiators which are useful are those which are compatible in the compositions. The polysilanes can be the phenylmethylpolysilanes defined by West in U.S. Patent No. 4,260,780, issued April 7, 1981; the aminated methylpolysilanes defined by Baney et al. in U.S. Patent No. 4,314,956, issued February 9, 1982; the methylpolysilanes of Peterson et al. in U.S. Patent No. 4,276,424, issued June 30, 1981; and the polysilastyrene defined by West et al. in U.S. Patent No. 4,324,901, issued April 13, 1982.

The viscosity stabilizer, (iv), is a material which is added to the composition to assist in delaying or preventing the gellation of the composition during storage and at temperatures as high as 100°C. This viscosity stabilizer is compatible in the composition and keeps the composition from doubling in 25°C. viscosity when it is heated at 100°C. for 24 hours. Amines are observed to serve as viscosity stabilizers. A preferred amine is 2-(diisopropylamino)ethanol. Another amine which is suitable, is trioctylamine. Another type viscosity stabilizer is a free radical scavenger, such as p-methoxyphenol (also known as monomethyl ester of hydroquinone, MEHQ), catechol, 4-t-butylcatechol, phenothiazine, hydroquinone, 2,6-di-t-butyl-p-methylphenol and N-phenyl-2-naphthylamine. The free radical scavenger viscosity stabilizers are used in amounts of preferably of zero to one weight percent based on the weight of the composition, more preferably from 0.01 to 0.1 weight percent. The most preferred free radical scavenger viscosity stabilizer is MEHQ.

The vinyl/mercapto compositions can contain reinforcing agent, (v). The compositions preferably contain a reinforcing agent when a stronger or tougher cured product is desired or needed. Preferably, a reinforcing agent is present in the composition for optical fiber coating applications. If the composition of this invention is used for other than optical fiber coating, such as for coating electrical equipment and devices, it can contain many kinds of fillers as reinforcing agents such as fumed silica which can be untreated or treated to make it hydrophobic such as with organosilanes, organosiloxanes or organosilazanes. For optical fiber coating applications, the reinforcing agent should be a material which does not substantially increase the opacity of the composition compared to the composition without the reinforcing agent. The reinforcing agent is preferably a benzene soluble silicone resin when the composition is used as a coating for optical fibers. One preferred benzene soluble silicone resin contains trimethylsiloxy units, dimethylvinylsiloxy units and $SiO_2$ units. For a high refractive index composition based on polydiorganosiloxane having phenyl radical, the preferred siloxane resins are phenyl-containing siloxane resins because these provide compatible compositions.

In addition to resins, the vinyl/mercapto compositions can be reinforced by using mixtures of polydiorganosiloxanes for (i) in which at least one polydiorganosiloxane has a low alkenyl radical content, such as is an alkenyl endblocked polydiorgano-siloxane and at least one polydiorganosiloxane has a high alkenyl content such as 15 to 30 mol percent siloxane units containing alkenyl radicals. The amount of the high alkenyl content polydiorganosiloxane can be up to 25 percent of the weight of (i). The highest tensile strengths are obtained in the range of from 5 to 20 percent of high alkenyl content polydiorganosiloxane. For example, a mixture of polydiorganosiloxanes can be a dimethylvinylsiloxy endblocked polydimethylsiloxane having a degree of polymerization of 50 to 300 mixed with a dimethylvinylsiloxy endblocked polydiorganosiloxane having 78 mol percent dimethylsiloxane units and 22 mol percent methylvinylsiloxane units and having a degree of polymerization of from 50 to 300 wherein the 22 mol percent methylvinylsiloxane containing polymer is present in amounts of from 5 to 20 weight percent.

Methods of making the vinyl/mercapto compositions involve mixing the ingredients (i) through (v) and can be varied as long as the resulting composition cures when exposed to the UV energy as defined. Preferably, (i) and (iv) are mixed, and then (ii) and (iii) are added and mixed using conventional mixing equipment. When (v) is present, the preferred mixing procedure is to mix (i) and (v) and thereafter add the remaining ingredients. When (v) is the benzene soluble silicone resin as defined above, the mixture of (i) and (v) may require heating

or heating at reduced pressure to remove solvent in which the benzene soluble silicone resin is kept. Sometimes, if a mixture of (i), (ii) and (iii) and optionally (v), prepared at room temperature, do not become clear upon the addition of (iv), heating the composition may produce clarity (compatibility) which will remain after the composition has cooled to room temperature.

The vinyl/mercapto compositions are mixtures of ingredients (i) through (v) where there are a total of at least five vinyl functional groups per molecule in (i) plus mercapto groups in (ii) and which have a ratio of alkenyl radicals per mercapto group of 0.5 to 1.5, thus the amounts of (i) and (ii) are defined once the specific polymers are stated. The amounts of (i) and (ii) can vary if (v) is a vinyl containing benzene soluble silicone resin. Also, the compositions preferably have a viscosity at 25°C. in the range of 1 to 20 Pa·s, most preferred is 1 to 8 Pa·s.

Other ingredients which might be considered as useful in the vinyl/mercapto composition are those which do not deleteriously alter the one package stability, the viscosity stability and the curing conditions. Such ingredients may be dyes, pigments or other fillers. Some ingredients, such as certain fillers would not find utility as a prime coat for optical fibers because such fillers would be abrasive, however, other less sensitive applications may find such materials completely adequate. Another ingredient which might be added is a processing aid which helps improve the compatibility, viscosity or coating properties but otherwise does not substantially change the composition properties.

The vinyl/mercapto compositions have numerous advantages over many other compositions used for coating optical fiber, such as are one package storable and have a viscosity which does not double when heated at 100°C. for 24 hours. The use of the adhesion additive (II) for those composition which are to be used as coating for optical fiber has the advantage that the adhesion can be controlled by altering the amounts of (A) and (B) in the combination and also the amount of (II) present in the ultraviolet radiation curable composition.

The vinyl/mercapto compositions cure to elastomers which have a relatively low modulus, are tough, remain elastomeric over a broad temperature range, such as from 80°C. to minus 60°C. for the low refractive index compositions. The compositions cure by an addition type reaction and do not give off by-products.

Other utility of the vinyl/mercapto compositions are wood finishing, textile coating, paper and plastic varnishes, adhesives, printing inks, metal decorating coatings, wire coatings, electronic encapsulants and resist coatings. In each of these applications, the amount of adhesion is important.

Another example of a curable material as mixture (I) is a vinyl/SiH composition which is a mixture of (c) a vinyl functional polydiorganosiloxane in which there is at least two vinyl functional groups per molecule, (d) a silicon bonded hydrogen compound having at least two silicon-bonded hydrogen atoms per molecule and there is at a total of at least five vinyl functional groups and silicon-bonded hydrogen atoms per combination of (c) and (d). Such a composition is described by Gant in U.S. Patent No. 4,064,027, issued December 20, 1977.

The vinyl functional polydiorganosiloxane (c) can contain 0.5 to 100 mole percent of $GG'_kSiO_{(3-k)/2}$ units in which G is a monovalent aliphatic saturated hydrocarbon radical, a monovalent halogenated saturated aliphatic hydrocarbon radical or a monovalent aromatic hydrocarbon radical, G' is a monovalent aliphatic unsaturated hydrocarbon radical and $\underline{k}$ has a value of from 0 to 2 and any non vinyl containing units are those having the general formula $G_eSiO_{(4-e)/2}$ in which $\underline{e}$ has a value of from 0 to 3 and in which the average number of organic groups per silicon atom ranges from 1.99 to 2.01 inclusive. The vinyl functional polydiorganosiloxane (c) can range from low molecular weight fluids, such as polymethylvinylcyclosiloxanes, for example, the tetramer, to high molecular weight gums having a molecular weight of one million or more. G can be a monovalent saturated aliphatic hydrocarbon radical including alkyl, such as methyl, ethyl, propyl, butyl, amyl, hexyl, decyl, dodecyl and octadecyl radicals; a monovalent halogenated aliphatic saturated hydrocarbon radical such as chloromethyl, chloropropyl, bromopropyl and 3,3,3-trifluoropropyl; or an monovalent aromatic hydrocarbon radical such as phenyl, totyl, benzyl or 2-phenylethyl. G' can be a monovalent aliphatic unsaturated hydrocarbon radical, such as vinyl, allyl, hexenyl and octadecenyl radicals. Although the polydiorganosiloxanes of (c) can have zero, one, two or three monovalent organic radicals per molecule, most of the units have two organic units per molecule and the average number of organic radicals per molecule is from 1.99 to 2.01 inclusive.

Polydiorganosiloxane (c) can be illustrated by the following polymers; dimethylvinylsiloxy-terminated polydimethylsiloxane, dimethylallylsiloxy-terminated polydimethylsiloxane, phenylmethylvinylsiloxy-terminated diphenylsiloxane-dimethylsiloxane copolymer, trimethylsiloxy-terminated methylvinylsiloxane-dimethylsiloxane copolymer and dimethylvinylsiloxy-terminated dimethylsiloxane-methylvinylsiloxane copolymer.

The silicon-bonded hydrogen compound (d) has at least two silicon-bonded hydrogen atoms per molecule. These compounds can be cyclic, linear or branched in configuration and can be either homopolymers or copolymers, These compounds range from liquids to solids. The compound of (d) is present in an amount such that the number of G' in (c) plus the number of silicon-bonded hydrogen atoms in (d) is at least five.

Compound (d) contains per molecule at least two hydrogensiloxane units of the general formula

$$HG_fSiO_{(3-f)/2}$$

in which each G is the same as defined above and f is 0, 1 or 2; and any other units in compound (d) are selected from the group consisting of

$GSiO_{3/2}$, $G_2SiO$, $G_3SiO_{1/2}$ and $SiO_2$

in which each G is as defined above. The molecular configuration of compound (d) can be straight-chained (linear), branched, cyclic or network. The degree of polymerization is two or more, however, from a standpoint of polymerizability, 2,000 is the upper limit. Some illustrations of compound (d) include dimethylhydrogensiloxy-terminated dimethylsiloxane-methylhydrogensiloxane copolymer, trimethylsiloxy-terminated dimethylsiloxane-methylhydrogensiloxane copolymer, trimethylsiloxy-terminated poly(methylhydrogensiloxane) and cyclic poly(methylhydrogensiloxane).

The amount of polydiorganosiloxane (c) and compound (d) in the composition generally is based on the ratio of silicon-bonded hydrogen atoms in (d) per aliphatic unsaturated hydrocarbon radical in (c). The amounts used are preferably such that there is from 0.2 to 5 moles of silicon-bonded hydrogen atom per mole of aliphatic unsaturated hydrocarbon radical.

The photoinitiator can be any of those described above with the proviso that they are effective with the particular ingredients selected for (c) and (d), as well as, whether and what kind of other ingredients might be present in the composition. Photoinitiators which can be used include aromatic ketones such as acetophenone, trimethyl-silylated benzophenone, propiophenone, 3-methylacetophenone, 4-methylacetophenone, benzoin ethyl ether, polydimethylsiloxane in which both ends are bonded through ether linkages with benzoin, 4-allylacetophenone, 3-benzylacetophenone, 4-methoxybenzophenone, 4-isopropylphenyl-1-hydroxyisopropyl ketone, benzophenone, benzoin and 3-pentylacetophenone. Additives which might be used include fillers such as fumed silica, quartz powder, glass fiber, alumina and metal carbonates such as calcium carbonate and magnesium carbonate.

Another kind of curable material useful as mixture (I) is an acryl siloxane composition which is a polydiorganosiloxane, (e), having at least two functional groups selected from the group consisting of acrylate, methacrylate and acrylamide. These polydiorganosiloxanes of (e) can be present in compositions which contain other ingredients, for example, the compositions described in copending application Serial No. 118,146, filed November 6, 1987, by Beth I. Gutek, assigned to the same assignee as the present application. These compositions described by Gutek have a dual curing mechanisms, i.e. they cure by exposure to ultraviolet radiation and also by exposure to moisture.

The acryl siloxane compositions described by Gutek comprise an acrylamide siloxane composition having (1) at least 10 weight percent of an acrylamide polyorganosiloxane having at least two groups which have acrylamide group functionality bonded to silicon atoms through Si-C bonds and on the average at least 20 but less than 1500 siloxane units per molecule, the organic groups bonded to the silicon atoms other than those having the acrylamide group functionality are selected from the group consisting of methyl and phenyl, (2) at least 20 weight percent of a polydiorganosiloxane having endgroups where there are two alkoxy groups per endgroup bonded to silicon through an Si-O bond and one methacrylate group bonded to silicon atoms through Si-C bonds and having on the average less than 350 diorganosiloxane units per molecule, said diorganosiloxane units being selected from dimethylsiloxane units, diphenylsiloxane units and methylphenylsiloxane units wherein at least 50 percent of the organic groups of the diorganosiloxane are methyl, (3) from 0.5 to 10 weight percent of a photoinitiator which is compatible with (1) and (2) and (4) a catalytic quantity of an organic titanate sufficient to cause a curing reaction when exposed to moisture after the composition is exposed to ultraviolet radiation.

The acrylamide functional groups can be either on the terminal silicon atoms of the polymer chain or they can be pendent on silicon atoms along the polymer chain. The remaining organic groups bonded to the silicon atoms of the polyorganosiloxane are methyl or phenyl, where the methyl are preferred for economical reasons, the combinations of methyl and phenyl can be useful for providing compatible compositions with reactive diluents and photoinitiators. Acrylamide functional polydiorganosiloxanes are known in the art from Varaprath in U.S. Patent No. 4,608,270, issued August 26, 1986. The polyorganosiloxanes preferably contain from 20 to 1500 siloxane units and at least two acrylamide groups. The siloxane units can include dimethylsiloxane units, diphenylsiloxane units, methylphenylsiloxane units, trimethylsiloxy units, dimethylphenylsiloxy units and siloxane units of the formula

$$WG^*N(Q'G^*N)_dQ\overset{\displaystyle A^*_c}{\overset{|}{Si}}O_{(3-c)/2}$$

in which W is H or G", G" is a monovalent hydrocarbon radical, A* is methyl or phenyl, Q and Q' are divalent

hydrocarbon radicals, G* is an acyl radical having the formula

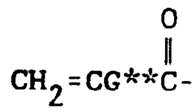

where G** is H or $CH_3$, c is 1 or 2 and d is 0 or 1. The monovalent hydrocarbon radicals, G", can be alkyl radicals such as methyl, ethyl, propyl, butyl, hexyl and octyl; cycloaliphatic radicals such as cyclohexyl; aryl radicals such as phenyl, benzyl, styryl, tolyl and xenyl; and alkenyl radicals such as vinyl and allyl. Q and Q' are divalent hydrocarbon radicals such as ethylene, propylene, isopropylene, butylene, isobutylene, hexylene, octylene and phenylene. Q is preferably ethylene and Q' is preferably propylene or isobutylene. When G** is hydrogen, the acyl radical is acrylyl radical and when G** is methyl, the acyl radical is methacrylyl radical. Polydimethylsiloxanes endblocked with

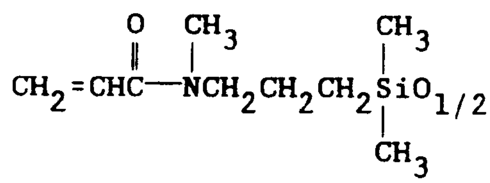

are preferred when the molecular weight is on the low end of the range, such as from 50 to 250 siloxane units and when low viscosities are desired. The polydimethylsiloxanes which contain pendent or both pendent and terminal acrylamide functional groups are preferred when a higher crosslinked density is desired, such as to make tougher materials. The preferred polydiorganosiloxanes in the present compositions provide compositions which cure by the dual mechanism to coatings which exhibit a tougher material than when the lower molecular weight polydiorganosiloxanes are used.

The polydiorganosiloxane (2) contains dimethylsiloxane units, diphenylsiloxane units and methylphenylsiloxane units to provide on the average less than 350 siloxane units, preferably less than 100 siloxane units. The polydiorganosiloxane (2) is preferably endblocked with (gamma-methyacryloxyalkyl)dimethoxysiloxy units where the alkyl is preferably propylene or isobutylene. These polydiorganosiloxanes of (2) can be prepared, for example, by mixing hydroxyl endblocked polydiorganosiloxane, a silane such as gamma-methacryloxy-propyltrimethoxysilane or gamma-methacryloxyisobutyltrimethoxysilane, in the presence of a catalytic amount of alcoholic potassium hydroxide. It is recommended that polymerization inhibitor be used during this process and can include such compounds as phenothiazine and para-methoxyphenol. A slight excess of the theoretical amount of silane is recommended to ensure complete reaction, such as 10 weight percent excess. The ingredients are mixed and heated to remove the stoichiometric amount of methanol (in this illustrated method). After the stoichiometric amount of alcohol is removed, the resulting mixture is neutralized with acetic acid. The polydiorganosiloxanes of (2) have a general formula

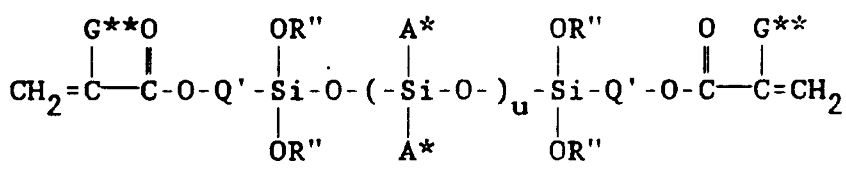

where G** is H or methyl, Q' is a divalent alkylene radical such as propylene or isobutylene, R" is an alkyl radical such as methyl, ethyl or propyl, each A* is methyl or phenyl and u is an average value of less than 350. The resulting polydiorganosiloxane (2) made from the process defined herein may contain some unreacted silane because an excess is used. Because such an excess is usually in the range of less than 20 weight percent, the compositions can include the excess silane, such as from 5 to 15 weight percent based on the weight of the product of the process.

The photoinitiator (3) is one which is compatible with a combination of (1) and (2) and which will function in the presence of organic titanate. Photoinitiators which are useful in these compositions include

$C_6H_5$-C(O)C($CH_3$)$_2$-OH,

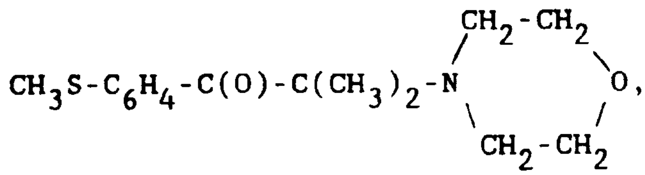

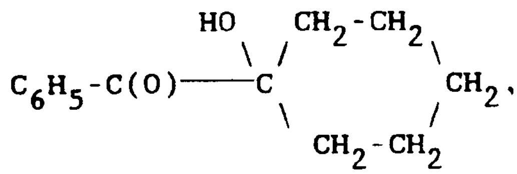

and benzoin methyl ether.

The organic titanate catalyst of (4) provides the moisture curability for the composition and can be any of the conventional organic titanates such as tetraisopropyl titanate, tetrabutyl titanate, bis(acetylacetonate)diisopropyl titanate and bis(ethoxyacetylacetonate)diisopropyl titanate. The amount of the organic titanate should be sufficient enough to catalyze the composition when exposed to atmospheric moisture after having been exposed to ultraviolet radiation. Thus, any organic titanate which undergoes some reaction from ultraviolet radiation may not be suitable if it looses its ability to cause the curing reaction in the shadowed areas. Also the amount of organic titanate should not be so great as to influence the ultraviolet radiation curing mechanism. A preferred range of organic titanate is from 0.05 to 1 weight percent based on the total weight of the composition. A preferred organic titanate is tetrabutyl titanate.

The acrylamide siloxane compositions can contain a reactive diluent to reduce the viscosity of the composition and to provide tougher cure films and coatings. The reactive diluent must be compatible with the rest of the ingredients of the composition and react during the curing processes so that they become part of the cured product. Reactive diluents which were found to be especially useful for these compositions include isobornyl acrylate, cyclohexyl acrylate and 2-ethylhexyl acrylate. The compositions can also contain small amounts of multifunctional acrylates, such as up to 10 weight percent based on the weight of the composition. In compositions which are used for purposes other than conformal coatings, the kinds and amounts of reactive diluents will vary, such as the use of diacrylates and multifunctional acrylates.

These acrylamide siloxane compositions are solventless, can be made with low viscosities and can be cured to flexible materials which can exhibit cold temperature flexibility. Being solventless and low in viscosity is a desirable combination for coatings such as would be useful as conformal coatings for printed circuit boards, especially when they have dual cure, UV and moisture and when the resulting cured films and coatings have low temperature flexibility.

These acrylamide siloxane compositions are particularly useful as conformal coatings for printed circuit boards or printed wire boards, depending on the terminology one desires to use. Compositions which are especially useful coatings for these boards, have viscosities low enough so that the boards can be dip coated or spray coated and cure to an acceptable tough coating. Such compositions have a viscosity at 25°C. in the range of 0.07 to 0.2 Pa·s and comprise at least 20 weight percent of (1), polydimethylsiloxane having acrylamide functional groups at the polymer ends; at least 20 weight percent of (2) polydiorganosiloxane having endgroups containing both alkoxy groups and methacrylate groups where there are two alkoxy groups per endgroup bonded to silicon through an Si-O bond and one methacrylate group bonded to silicon through an Si-C bond and having less than 350 diorganosiloxane units per molecule, where said diorganosiloxane units are selected from the group consisting of dimethylsiloxane units, diphenylsiloxane units and methylphenylsiloxane units wherein at least 50 percent of the organic groups of the diorganosiloxane units are methyl; at least 20 weight percent of a reactive diluent selected from the group consisting of isobornyl acrylate, cyclohexyl acrylate and 2-ethylhexyl acrylate, 0.5 to 10 weight percent of a photoinitiator which is compatible with (1) and (2) and 0.05 to 1 weight percent of an organic titanate. The preferred compositions cure by exposure to a dose of ultraviolet radiation in the amount of as little as 200 millijoules per square centimeter (in an inert atmosphere such as nitrogen) and still moisture cure in the shadow areas or dark areas, i.e. where the composition is not exposed to the ultraviolet radiation. The compositions require high doses of ultraviolet radiation to cure in air, but readily cure under an inert atmosphere such as nitrogen. Other preferred compositions are those having polydimethylsiloxane (1) having on the average from 20 to 125 dimethylsiloxane units per molecule, polydiorganosiloxane of (2) being polydimethylsiloxane having on the average from 10 to 50 dimethylsiloxane units per molecule and the reactive diluent is isobornyl acrylate.

A specific acrylamide siloxane composition which is useful as mixture (I) is designed to cure by exposure to ultraviolet radiation in an air atmosphere and be useful as a conformal coating, is disclosed in U.S. Patent No. 4,824,875, issued April 25, 1989, Serial No. 118,086, filed November 6, 1987, by Beth I. Gutek, and assigned to the same assignee as the present application to show such conformal coating compositions which can be used as mixture (I) of this invention. These acrylamide siloxane compositions will be referred to herein as conformal coating compositions.

The conformal coating compositions have dual cure properties, i.e., ultraviolet radiation cure and moisture cure. These compositions are designed to be used as conformal coatings and have uncured properties, curing characteristics and cured properties which makes them particularly useful to coat printed circuit boards or printed wire boards.

The conformal coating compositions, as a specific embodiment, comprise (1a) at least 20 weight percent based on the total weight of the composition of an acrylamide polydimethylsiloxane having acrylamide end groups bonded to silicon atoms through Si-C bonds and on the average at least 20 to less than 300 dimethylsiloxane units per molecule, (2a) at least 20 weight percent based on the total weight of the composition of a polydiorganosiloxane having endgroups containing both alkoxy groups and methacrylate groups as described above for (2), (3a) at least 20 weight percent based on the total weight of the composition of a reactive diluent selected from the group consisting of isobornyl acrylate, cyclohexyl acrylate and 2-ethylhexyl acrylate, (4a) from 0.5 to 10 weight percent based on the total weight of the composition of a photoinitiator combination in which there is at least 0.25 weight percent of

$$C_6H_5\text{-}C(O)C(CH_3)_2\text{-}OH$$

and at least 0.25 weight percent of

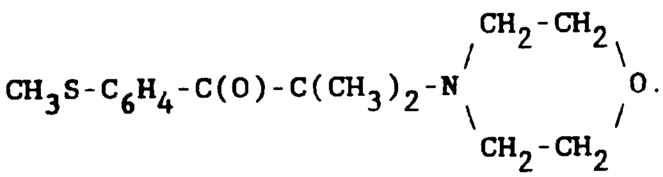

(5a) from 0.1 to 2 weight percent based on the total weight of the composition of an amine selected from the group consisting of dimethylethanolamine and diisopropylethanolamine and (6a) from 0.05 to 1 weight percent based on the total weight of the composition of an organic titanate, where the composition has a viscosity at 25°C. in the range of 0.07 to 0.2 Pa·s.

These compositions have a low viscosity, have the ability to cure by both UV radiation and moisture to films which have low temperature flexibility.

The conformal coating compositions can also contain certain other additives which are not detrimental to the curing characteristics, the storage stability, the cured film and the usefulness of the cured film. Such additives include antioxidants and storage stabilizers.

Substrates which are populated with devices having geometries such that coating them produces areas where the composition would be in the shadows when the ultraviolet radiation is directed at the surface, can be coated with the conformal coating compositions which can be cured in areas where the ultraviolet radiation strikes, as well as, in the shadow area. The composition in the shadow areas will cure by merely being exposed to atmospheric moisture. Such substrates include populated printed circuit boards or printed wire boards.

The conformal coating compositions are useful as conformal coatings for printed circuit boards or printed wire boards. The preferred conformal coating compositions cure by exposure to a dose of ultraviolet radiation in the amount of as little as 200 millijoules per square centimeter (in air) and still moisture cure in the shadow areas or dark areas, i.e. where the composition is not exposed to the ultraviolet radiation.

Another useful UV curable siloxane composition, as mixture (I) is described by Michael A. Lutz, in copending application Serial No. 07/335,908, filed April 10, 1989, entitled "Ultraviolet Cured Gels With Controlled Modulus and Viscosity" and assigned to the same assignee as the present application which shows acryl functional siloxane gel compositions as mixture (I) of the present invention. These compositions as mixture (I) comprise a blend of acryl functional polydiorganosiloxanes and a photosensitization system for curing the blend when irradiated with ultraviolet radiation, wherein the blend is (F) 4 to 90 mole percent of an acryl functional endblocked polydiorganosiloxane of the general formula

$$A^2R^4{}_2SiO(R^5{}_2SiO)_mSiR^4{}_2A^2,$$

(H) 9 to 50 mole percent of a mono-acryl functional endblocked polydiorganosiloxane of the general formula

$$R^4{}_3SiO(R^5{}_2\ SiO)_mSiR^4{}_2A^2,$$

and (J) 0 to 65 mole percent of a non-functional polydiorganosiloxane of the formula

$R^4_3SiO(R^5_2SiO)_mSiR^4_3$

where, in the above formulae, $R^5$ is a monovalent radical selected from the group consisting of alkyl, aryl and fluorinated alkyl; each $R^4$ is independently selected from the group consisting of $R^5$, hydroxyl and a hydrolyzable group, $A^2$ is an acryl functional radical bonded to silicon atom through silicon-carbon bond where the acryl function has the formula

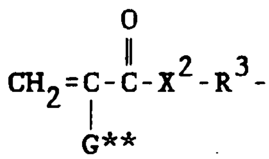

or the formula

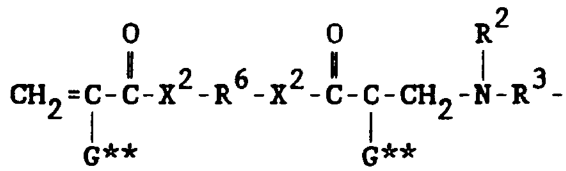

in which G** is hydrogen atom or methyl, $X^2$ is divalent oxygen or $-N(R^2)-$, $R^2$ is hydrogen atom or an alkyl of 1 to 4 carbon atoms, $R^3$ is a divalent hydrocarbon radical having from 1 to 10 carbon atoms per radical, $R^6$ is a divalent hydrocarbon radical or a divalent hydrocarbon radical containing ether linkages and $\underline{m}$ has a value of from 30 to 3,000, the mole percentages being based on the total blend as 100 mole percent and where the polydiorganosiloxanes of the blend are present in amounts to provide 20 to 95 percent of the endblocking as acryl functionality and 5 to 80 percent of the endblocking as non-functional.

The acryl functionality can be many kinds and for these blends, the term "acryl functional" or "acryl functionality" refers to the following groups: acrylate ($CH_2=CHCOO-$), methacrylate {$CH_2=C(CH_3)COO-$}, N-alkyl-N-acrylamide {$CH_2=CON(R^2)-$} and N-alkyl-N-methacrylamide {$CH_2=C(CH_3)CON(R^2)-$}, wherein $R^2$ is defined above. Some examples of acryl functionality include acryloxyalkyl functional, methacryloxyalkyl functional, acrylamidoalkyl functional and methacrylamidoalkyl functional. These kinds of acryl functionalities on a variety of polyorganosiloxanes are known in the art and can be made by many methods described therein. These particular blends are unique and offers unique advantages for compositions which cure upon exposure to ultraviolet radiation and are useful for coating or encapsulating electronic devices with delicate features such as fine wire bonds.

The acryl functional polydiorganosiloxanes of (F) are those which have two acryl functions per molecule, one per terminating or endblocking siloxane unit. These acryl functional polydiorganosiloxanes of (F) can be those in which $R^5$ is a monovalent radical such as an alkyl radical, such as methyl, ethyl, propyl, butyl and cyclohexyl; an aryl radical such as phenyl, 2-phenylethyl and benzyl; or a fluorinated alkyl radical such as 3,3,3-trifluoropropyl, 2-(perfluoroethyl)ethyl and 2-(perfluorobutyl)ethyl. Each $R^4$ is independently selected from hydroxyl, a radical represented by R, or a hydrolyzable radical bonded to silicon atom such as alkoxy illustrated by methoxy, ethoxy, isopropoxy, butoxy and isobutoxy or other non-corrosive hydrolyzable groups such as isopropenoxy, acetamido and ketoximo. The acryl functional polydiorganosiloxanes of (F) can have a degree of polymerization such that the value of $\underline{m}$ ranges from 30 to 3,000, preferably from 50 to 1,000 in which the preferred diorganosiloxane units are selected from the group consisting of dimethylsiloxane, phenylmethylsiloxane, diphenylsiloxane and methyl-(3,3,3-trifluoropropyl)siloxane. The acryl functionality, $A^2$, of (F) is bonded to silicon atoms at the end of the polydiorganosiloxane molecules through silicon-carbon bonds.

In the acryl groups, G** is a hydrogen atom or methyl, $X^2$ is divalent oxygen or a divalent radical of the formula $-N(R^2)-$ and $R^2$ is hydrogen atom or an alkyl of 1 to 4 carbon atoms, such as methyl, ethyl, propyl, isopropyl, butyl, isobutyl and tertiary butyl. $R^3$ is a divalent hydrocarbon radical having 1 to 10 carbon atoms per radical such as methylene, ethylene, butylene, hexylene, propylene, decylene, $-C_6H_4-$, $-CH_2CH_2C_6H_4-$,

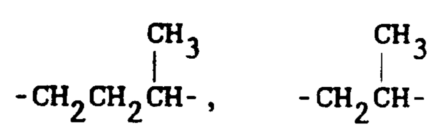 and 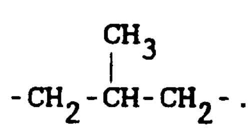

where the preferred $R^3$ are those having 2 to 6 carbon atoms per radical such as ethylene, propylene, isopropylene, butylene, isobutylene, tertiary butylene, pentylene and hexylene. $R^6$ is a divalent hydrocarbon radical or a divalent hydrocarbon radical containing ether linkages. Examples of $R^6$ as a divalent hydrocarbon radical include methylene, ethylene, propylene, butylene, hexylene, decylene,

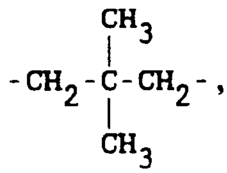 , 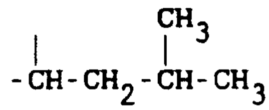 and 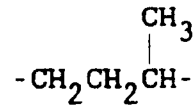 ;

and as a divalent hydrocarbon radical containing ether linkages includes $-CH_2CH_2-O-CH_2CH_2-$, $-(CH_2CH_2O)_3-CH_2CH_2-$, $-(CH_2CH_2CH_2O)_2-CH_2CH_2CH_2-$, $-(CH_2CH_2O)_8-CH_2CH_2-$,

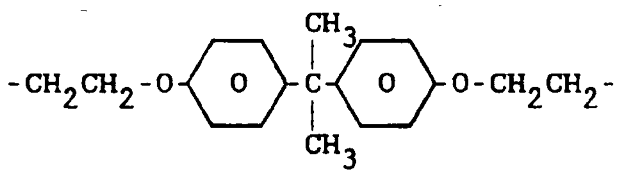 ,

$-(CH_2CH_2CH_2CH_2O)_{7.8}-CH_2CH_2CH_2CH_2-$, $-(CH_2CH_2O)_2-CH_2CH_2-$ and

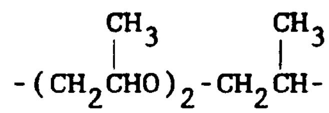 .

The acryl functional polydiorganosiloxane of (F) can be prepared by the methods described by Pigeon in U.S. Patent No. 4,290,869, issued September 22, 1981, which shows the siloxanes and their preparation using organotitanate as a catalyst. Lein et al., U.S. Patent No. 4,528,081, issued July 9, 1985, shows the preparation of polydiorganosiloxane like those described by Pigeon. Nakos et al. in U.S. Patent No. 4,699,802, issued October 13, 1987, shows acryloxyalkyl functional polydiorganosiloxanes which contain hydrolyzable functionality other than alkoxy, such as oxime, N-alkylamido and isopropenoxy. Lin et al. in U.S. Patent No. 4,503,208, issued March 5, 1985, shows acryl functional polydiorganosiloxanes prepared by reacting in the presence of an addition catalyst such as a platinum catalyst, an SiH endblocked polydiorganosiloxane and propargyl acrylate or propargyl methacrylate.

Acryl functional polydiorganosiloxane of (F) can be those in which the acryl functionality is acrylamide, especially N-alkyl-N-acrylamide or N-alkyl-N-methacrylamide. The amide polyorganosiloxane of (F) having acryl functionality contains two acrylamide functional groups bonded to silicon atoms through Si-C bonds on the terminal silicon atoms of the polymer chain. The remaining organic groups bonded to the silicon atoms of the polyorganosiloxane are defined above for R and are preferably methyl, phenyl or 3,3,3-trifluoropropyl. The acrylamide functional polydiorganosiloxanes are known in the art from Varaprath in U.S. Patent No. 4,608,270.

The mono-acryl functional endblocked polydiorganosiloxanes of (H) are not particularly well known but can be prepared by many of the methods used to prepare the acryl functional polydiorganosiloxanes of (F). The mono-acryl functional endblocked polydiorganosiloxanes of (H) are made by first preparing a polydiorganosiloxane in which some of the endblocking units are triorganosiloxy in which the organic groups are alkyl, aryl or fluoroalkyl and the remainder of the endblocking units are hydroxyl. Dupree shows such polymers.

The mono-acryl functional endblocked polydiorganosiloxanes of (H) can be prepared by several methods by selecting the proper starting materials. It is difficult to prepare the polydiorganosiloxanes of (H) in the pure form, that is, where all the molecules have one non-functional endblock and one acryl functional endblock. Most of the economical methods of the preparation of polydiorganosiloxanes involves the use of equilibration methods and these methods produce statistical distributions of molecular species. For example, the preparation of polydiorganosiloxane (H) in which the acryl functional endblock is made by the method of reacting a silane with hydroxyl endblocked polydiorganosiloxane in the presence of a catalyst such as described by Pigeon, Lein et al., Nakos et al. and Lin et al. can be used if a starting polydiorganosiloxane is one in which some

of the molecules have one hydroxyl endblock and one non-functional endblock such as trimethylsiloxy unit. Such polydiorganosiloxanes are known from Dupree which shows the polydiorganosiloxane with some of the molecules having one hydroxyl endblock. Polydiorganosiloxanes used for (H) can be controlled best by selecting a method which will provide the desired number of molecules with one hydroxyl endblock. The number of acryl functional endblocked polydiorganosiloxane (F) molecules and the number of non-functional polydiorganosiloxanes (J) can then be varied to make a variety of blends. Starting with a polydiorganosiloxane with hydroxyl endblocks such as described by Dupree, one can use the method of reacting an acryl functional/alkoxy silane with these polydiorganosiloxanes in the presence of a condensation catalyst such as organotitanates to make the mono-acryl functional endblocked polydiorganosiloxane (H). Similarly, other methods can be used to make various kinds of (H) polydiorganosiloxanes such as those described for making the acryl functional endblocked polydiorganosiloxane of (F) except that the starting ingredients include a precursor for providing some non-functional endblocking groups. It is possible to prepare directly a composition having the mole percentage values of (F), (H) and (J) within the limits stated above by using such methods.

The non-functional endblocked polydiorganosiloxanes of (J) are well known in the art and can be obtained commercially. These non-functional polydiorganosiloxanes are also produced by the methods of making polydiorganosiloxanes of (H) which use equilibration techniques.

The blends are those composed of (F), (H) and (J) to provide 20 to 95 percent of the endblocks as acryl functionality and 5 to 80 percent of the endblocks as non-functional. The preferred blends contain 45 to 80 percent acryl functional endblocks and 20 to 55 percent non-functional endblocks.

The polydiorganosiloxanes of (F) and (H) can be made by a method known as Michael addition if the appropriate precursors are used, namely amine endblocked polydiorganosiloxanes, where there is an amine on both ends of the polydiorganosiloxane to make (F) and where there is an amine on only one end of the polydiorganosiloxane with the other end being non-functional to make (H). Such polydiorganosiloxanes can be used to make the gel compositions of this invention.

Lee et al. in U.S. Patent No. 4,697,026, issued September 29, 1987, teach acryl functional endblocked polydiorganosiloxanes which are made by a Michael addition of diacrylate or dimethacrylate functional compounds with secondary amine functional polydiorganosiloxanes. Lee et al. shows the preparation of polymers which use the Michael addition method.

Acryl functional endblocked polydiorganosiloxanes prepared by the Michael addition method are those having at least one acryl functional endblocking siloxane unit of the general unit formula

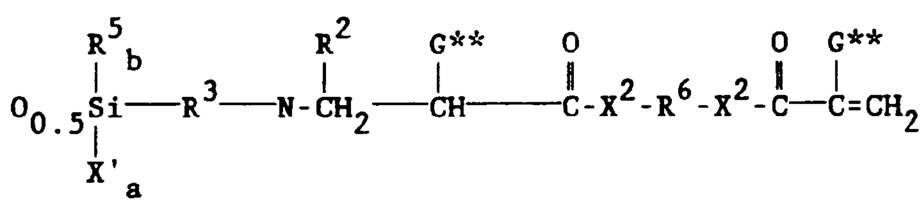

wherein $R^3$, $R^2$, $R^5$, G**, $R^6$ and $X^2$ are defined above, X' is a hydrolyzable group whose hydrolyzed groups do not form salts with the nitrogen atom, a is 0, 1 or 2 b is 0, 1 or 2 and a + b is two, and the repeating siloxane units present in the polydiorganosiloxane are these having the general unit formula $R_2SiO$ in which R is defined above.

The acryl functional endblocked polydiorganosiloxanes of (F) and (H) can be prepared by intimately mixing an amino functional polydiorganosiloxane having endblocking with one primary amine group or secondary amine group per polymer terminal with an acryl functional compound having two acrylate, methacrylate, acrylamide or methacrylamide groups per molecule. When the amine polydiorganosiloxane and acryl compound are mixed, there is a reaction which produces acryl functional endblocked polydiorganosiloxane and depending upon the amine precursor, whether it has an amine function on both ends or only one end will determine whether it is a polydiorganosiloxane of (F) or (H).

The compositions comprise the blend of polydiorganosiloxanes (F), (H) and (J) with a photosensitization system which comprises a photoinitiator useful in curing the acryl functional endblocked polydiorganosiloxanes to form a gel with a hardness and modulus suitable for encapsulating and/or coating electronic devices which have fragile components. The compositions are cured by exposure to ultraviolet radiation.

The blend of this invention can be mixed with photoinitiator and then exposed to ultraviolet radiation to cause the siloxane to crosslink. The photoinitiator can be any of those described above and can be used in amounts sufficient to provide the desired cure. Photoinitiators which are particularly useful in these compositions include those described for photoinitiator (3).

The compositions comprising the blend and photoinitiator are reasonably stable during storage but for additional protection and for exceptional situations one may find it advantageous to add a storage stabilizer. The compositions can contain a storage stabilizer, such as p-methoxyphenol (also known as monomethyl ester of hydroquinone), catechol, 4-t-butylcatechol, phenothiazine, hydroquinone, 2,6-di-t-butyl-p-methylphenol and N-phenyl-2-naphthylamine. The free radical scavenger viscosity stabilizers are used in amounts of preferably from 0.001 to 0.1 weight percent.

Such compositions can contain optional ingredients which may be suitable for some applications, however, effects such as uncured viscosity, hardness of the cured material, electrical properties, corrosive nature of the composition both uncured and cured should be evaluated when the compositions are to be used as a coating, encapsulant or potting compound for fragile electronic devices. Examples of optional ingredients which might be considered include surfactants, reinforcing agents such as fillers and resins, colorants, heat stabilizers and other property modifiers.

The compositions made with a blend of the acryl functional endblocked polydiorganosiloxanes can be made to have uncured viscosities suitable for coating, encapsulating or potting delicate electronic devices which will also cure to gels with a hardness required by the specific application. Different viscosities can be used to achieve the same hardness, therefore providing a broad range of manufacturing methods for applying the gel composition to a variety of electronic devices. In the alternative, the hardness can be varied while maintaining the same viscosity, therefore, if one has a specific manufacturing method for applying gel composition and the hardness requirements for the gel change, one can maintain the viscosity and change the hardness. The viscosity of the uncured gel composition and the hardness or modulus of the gel can be varied independently from one another. For example, at a given viscosity of blend, the total amount of non-functional endblocking of the polydiorganosiloxane can be varied to give a specific hardness or the total amount of non-functional endblocking can be held constant and the mole ratio of (F), (H) and (J) can be varied or a combination of both the total amount of non-functional endblocking and the mole ratio of (F), (H) and (J) can be varied. Increasing the number of polymer terminating groups which are non-functional generally reduces the hardness.

These compositions rapidly cure when exposed to ultraviolet radiation, usually in a few seconds and because they are based on polyorganosiloxane, they are suitable for integrated circuit protection. These compositions can have excellent purity, low moisture uptake, provide stress relief even at low temperatures, have excellent electrical properties, are thermally stable and can protect against harsh environment. Because of the nature of the compositions of this invention to independently vary the viscosity and the hardness, they are useful for photobarrier processing involving "in-situ" generation of flow barriers during material application and photoimaging to allow wafer stage application of permanent protective coatings. The compositions are shelf stable and can be shipped as a one package container product. The compositions can be used to protect integrated circuits and can be used in manufacturing where rapid processing is needed, such as automated production lines.

Compositions described in our copending application entitled "Ultraviolet Curable Phenyl Containing Compositions," Serial No. 07/335,638, filed April 10, 1989, and assigned to the same assignee as the present application shows additional acrylamide functional siloxane compositions for mixture (I). These compositions are compatible mixtures of acrylamide functional polyorganosiloxanes having an average unit formula

$$Y^2_gR^7_hSiO_{(4-g-h)/2}$$

in which $R^7$ is a monovalent organic group where at least 5 to 50 mole percent of $R^7$ are aromatic based on all $R^7$ equal to 100 mole percent, $Y^2$ is an acrylamide functional group bonded to the silicon atom through a silicon-carbon bond, $\underline{g}$ has a value such that there is on the average at least 0.4 acrylamide functional groups per molecule, $\underline{h}$ has a value such that the polyorganosiloxane can be applied to a substrate and cured by exposure to ultraviolet radiation and the sum of $\underline{g}$+w$\underline{h}$ is at least 0.7 and a photosensitization system.

The polyorganosiloxanes contain acrylamide functionality and from 5 to 50 mole percent aromatic, preferably from 20 to 50 mole percent, based on the total number of the organic groups on the silicon atoms, less the acrylamide functional groups. They can contain any combination of siloxane units and therefore the structure will vary widely and include linear, branched, three dimensional network, cyclic and the like. The siloxane units can be monoorganosilsequioxane, diorganosiloxane, triorganosiloxy and $SiO_2$. The acrylamide functionality can be on any of the organic group-containing siloxane units, however, the preferred polyorganosiloxanes are the linear polydiorganosiloxanes which are essentially composed of diorganosiloxane units.

These acrylamide functional polyorganosiloxanes are a unique class of siloxane polymers for use in ultraviolet radiation curable compositions. These polyorganosiloxanes exhibit a number of improvements for such compositions. The improvement is a result of the amount of aromatic groups which the polyorganosiloxane contains. These aromatic-containing acrylamide functional polyorganosiloxanes have a compatibility with a greater number of non-silicon compounds, such as photoinitiators, reactive diluents, adhesion additives, flow control agents and stability additives, than acrylamide functional polyorganosiloxanes which contain less than

5 mole percent aromatic groups on the siloxane polymer. The number of non-silicon compounds which are compatible with these siloxane polymers increases as the aromatic content of the polyorganosiloxane increases. These polyorganosiloxanes provide compositions which cure to products having improved low temperature flexibility and contrary to the teachings of the art, such as Sato et al. in U.S. Patent No. 4,364,809, issued December 21, 1982, compositions which contain the aromatic containing acrylamide functional polyorganosiloxanes can cure faster as the mole percentage of aromatic groups increases.

Ingredients of compositions made from the aromatic group-containing, acrylamide functional polyorganosiloxanes which show improved compatibility are the photoinitiators. The photoinitiator is used in amounts sufficient to provide the desired cure of the composition. The amount of photoinitiator can be increased as the mole percentage of aromatic group increases in the acrylamide functional polyorganosiloxane because the compatibility of the photoinitiator in the composition increases. Polyorganosiloxanes which contain no aromatic groups limit both the kind and amount of photoinitiator which can be used in ultraviolet radiation curable compositions because they are incompatible at higher concentrations or because they become incompatible as the composition cures and precipitate from the material. This unique class of acrylamide functional polyorganosiloxanes provides the ability to make compositions which can have cure characteristics designed for the specific application and the kind and amount of photoinitiator can be selected to achieve the desired results without having the compatibility of the photoinitiator in the composition dictating the cure characteristics.

The photosensitization system is in the simplest form, a photoinitiator. It can also include other ingredients which provide some function to the photocurable process, such as the presence of chain transfer agents, like an amine, especially tertiary amines and photosensitizers as described herein. Other ingredients are known in the art. Examples of photoinitiators include those described herein.

Reactive diluents are often used in ultraviolet radiation curable compositions to provide crosslinking and to reinforce and strengthen the cured products. However, polyorganosiloxanes do not readily make compatible compositions with these reactive diluents and the choice of the kind and amount of reactive diluent is limited because of this incompatibility problem. Limiting the kinds and amounts of reactive diluents also limits the properties which can be achieved with ultraviolet radiation curable compositions based on polyorganosiloxanes, for example the acrylamide functional polyorganosiloxanes. The unique class of aromatic group containing, acrylamide functional polyorganosiloxanes provides a broader spectrum of kinds of reactive diluents and amounts of such reactive diluents which can be used to make ultraviolet radiation curable compositions. In U.S. Patent No. 4,824,875, issued April 25, 1989, to Beth I. Gutek, the reactive diluents are limited to isobornyl acrylate, cyclohexyl acrylate and 2-ethylhexyl acrylate because others are incompatible and of these three reactive diluents, the isobornyl acrylate is the preferred because of the compatibility with the polyorganosiloxanes of the composition which are methylsiloxanes. Isobornyl acrylate is useful but has a very undesirable odor. The use of the aromatic group containing, acrylamide functional polyorganosiloxanes having from 5 to 50 mole percent aromatic groups bonded to the silicon atoms permits one to select many other kinds of reactive diluents and thus the odor can be eliminated or at least substantially reduced. In addition to the above reactive diluents, others which are compatible with the polyorganosiloxanes containing the aromatic groups include hexanediol diacrylate, butanediol diacrylate, trimethylolpropane trimethacrylate, vinyl acetate, tetrahydrofurfuryl acrylate, trimethylolpropane triacrylate, phenoxyethyl acrylate and tripropylene glycol diacrylate.

These acrylamide functional polyorganosiloxanes contain organic groups bonded to the silicon atoms (other than the acrylamide functional groups) which are from 5 to 50 percent aromatic, preferably phenyl, with the remainder being other organic groups, preferably methyl. $R^7$ represents the organic groups which are non-acrylamide functional and which are from 5 to 50 percent aromatic. $R^7$ is a monovalent radical where 5 to 50 mole percent are aryl radicals such as phenyl, 2-phenylethyl and benzyl and the remainder are alkyl radicals such as methyl, ethyl, propyl, butyl and cyclohexyl or a fluorinated alkyl radical such as 3,3,3-trifluoropropyl, 2-(perfluoro-ethyl)ethyl and 2-(perfluorobutyl)ethyl. $Y^2$ is an acrylamide functional group bonded to the silicon atoms through a silicon-carbon bond. These acrylamide functional groups are preferably acrylamidoalkyl or methacrylamidoalkyl. $\underline{g}$ represents the number of $Y^2$ groups per silicon atom of the average unit formula and has a broad range, but should be such that there is at least 0.4 acrylamide functional groups per molecule and can be as high as 0.5 acrylamide functional groups per silicon atom of the average unit formula. However, the preferred acrylamide functional polyorganosiloxanes which can be used to make compositions which can be applied to substrates and cured by exposure to ultraviolet radiation usually do not have more than 0.1 acrylamide functional groups per silicon atom. The preferred value of $\underline{g}$ is from 0.001 to 0.04. $\underline{h}$ has a value such that the resulting acrylamide functional polyorganosiloxane can be applied to a substrate and also cured by exposure to ultraviolet radiation. This value for $\underline{h}$ is such that the polyorganosiloxane can be used to make compositions have a viscosity or can be made to have a viscosity such as by admixture with reactive diluents where said compositions can be coated on substrates. $\underline{h}$ preferably will range from 0.7 to slightly above 2, such as 2.02. The sum of $\underline{g}$ +$\underline{h}$ is at least 0.7 and preferably ranges from 0.7 to 2.02.

The acrylamide functionality, $Y^2$, is bonded to silicon atoms of the polyorganosiloxane molecules through silicon-carbon bonds and has a formula

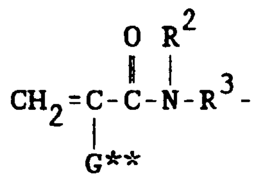

or the formula

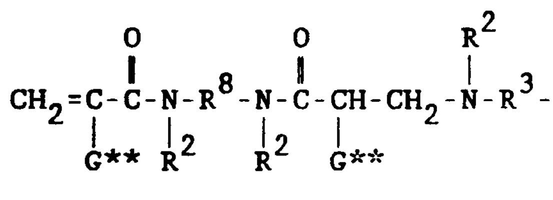

in which G**, $R^2$ and $R^3$ are defined above. $R^8$ is a divalent hydrocarbon radical. Examples of $R^8$ as a divalent hydrocarbon radical include methylene, ethylene, propylene, butylene, hexylene, decylene,

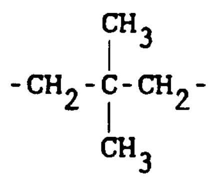 , 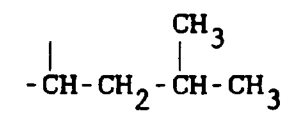 and 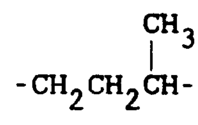 .

Acrylamide functional polyorganosiloxanes which cure by exposure to ultraviolet radiation are known in the art, for example, Morehouse in U.S. Patent No. 2,929,829, issued March 22, 1960, teaches that acrylamide compounds can be made by reacting acyl halides with aminoalkyl silicon compounds to produce acylamide functional silicon compounds. Morehouse teaches the following reaction

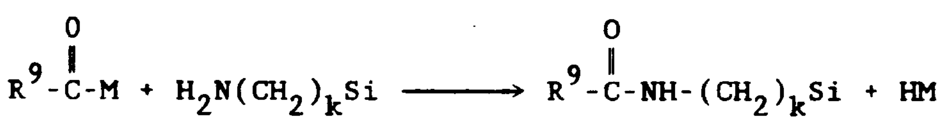

wherein $R^9$ is an alkyl, aryl, alkenyl or a monovalent heterocyclic ring, M is a halogen atom and $\underline{k}$ is an integer of at least 3. When $R^9$ is vinyl and M is chlorine, the halogen compound is acryloyl chloride and the product formed would be an acrylamide functional silicon compound. Morehouse shows a method of preparing acrylamide functional polyorganosiloxanes which can be used in this invention. The polyorganosiloxanes having acrylamide functionality are also taught by Varaprath in U.S. Patent No. 4,608,270.

The above compositions which are useful as mixture (I) can contain optional ingredients which may be suitable for some applications, however, those which effect the cure and/or the properties of the cured material should be evaluated for suitability to the specific application. In those applications in which the viscosity of the uncured material, electrical properties, corrosive nature of the composition both uncured and cured are important, the kind of optional ingredient should be carefully evaluated, especially when the compositions are to be used as a coating, encapsulant or potting compound for fragile electronic devices. Examples of optional ingredients which might be considered include surfactants, reinforcing agents such as fillers and resins, colorants and other property modifiers.

The compositions can be used in many kinds of applications in which curing by ultraviolet radiation is acceptable. Particularly suitable applications are those in which electrical and electronic equipment is to be protected such as for coating, encapsulating or potting electronic devices. The compositions of this invention cure to products which vary from hard resin type materials to elastomeric materials to soft gel materials. Some of the compositions are useful for paper coatings. Because the acrylamide functional polyorganosiloxanes can form compatible compositions with a wide variety of non-silicon compounds, the kinds of cured products will

vary widely in both physical and chemical properties and therefore the use to which they can be put will also vary widely. The compositions of this invention can exhibit the characteristic that they maintain many of their properties at low temperature, such as -60°C. flexibility.

The gel compositions are of particular interest because they rapidly cure when exposed to ultraviolet radiation, usually in a few seconds and because they are based on polyorganosiloxane, they are suitable for integrated circuit protection. These compositions have excellent purity, low moisture uptake, provide stress relief even at low temperatures, have excellent electrical properties, are thermally stable and can protect against harsh environments. Because of the nature of the gel compositions to independently vary the viscosity and the hardness, they are useful for photobarrier processing involving "in-situ" generation of flow barriers during material application and photoimaging to allow wafer stage application of permanent protective coatings. The compositions are shelf stable and can be shipped as a one package container product. The gel compositions can be used to protect integrated circuits and can be used in manufacturing where rapid processing is needed, such as automated production lines.

The ultraviolet-generating source useful for curing the compositions of the invention can be any such source known in the prior art, such as hydrogen discharge tubes, xenon discharge tubes, low-pressure mercury lamps, medium-pressure mercury lamps and high-pressure mercury lamps. The source of the ultraviolet radiation is not critical as long as cure can be obtained. It is preferred to use a broad spectrum wavelength ultraviolet source for radiating the composition to provide cure. Many sources are available commercially.

The following examples are intended to be illustrative of the present invention but should not be construed as limiting. In the following examples, "part or parts" represent "part by weight or parts by weight", the viscosity is at 25°C. unless otherwise stated.

EXAMPLE 1

Ultraviolet radiation curing coating A (Coating A) was prepared by mixing 79.4 parts of a mixture of 32 weight percent xylene and 68 weight percent of benzene soluble silicone resin containing dimethylvinylsiloxy units, trimethylsiloxy units and $SiO_2$ units where the ratio of the sum of moles of dimethylvinylsiloxy units and trimethylsiloxy units to $SiO_2$ units was 0.65:1 and there was 1.9 weight percent vinyl radical in the resin with 100 parts of dimethylvinylsiloxy endblocked polydimethylsiloxane having a viscosity of about 2 Pa·s. The resulting mixture was stripped of xylene by heating to 100°C. at a pressure of about 670 Pa resulting in a clear polymer-resin blend. A mercapto functional polyorganosiloxane of the average formula

$$(CH_3)_3SiO\{(CH_3)_2SiO\}_{43}\{CH_3\underset{\substack{|\\ CH_2CH_2CH_2-SH}}{Si}O\}_5Si(CH_3)_3$$

in an amount of 21.00 parts was mixed into 77.04 parts of the polymer-resin blend and then 0.98 part of photosensitizer,

$$HO(CH_3)_2C-\overset{\substack{O\\ \|}}{C}-C_6H_5,$$

0.98 part of 2-(diisopropylamino)ethanol and 0.01 part p-methoxyphenol was mixed to make Coating A which was clear, had a viscosity of 2.08 Pa·s and was stored in a container opaque to light including UV radiation.

Ultraviolet radiation curable siloxane compositions were prepared by mixing 100 parts of Coating A with 5 parts of adhesion additive as described below and 0.5 part of tetrabutyltitanate. These compositions films were cast onto Corning 2947 glass microslides and onto aluminum Q-panels with a mill finish, 500-A 35. The cast films were cured by irradiating with ultraviolet radiation from a UVEXS Model 750 A (LCU) manufactured by UVEXS INC., Mountain View, California. Each pass through the LCU gave a dose of 1.0 J/cm$^2$ as measured by an IL 390 Light Bug manufactured by International Light. Each film was given two passes unless otherwise stated.

Adhesion additives as described below were prepared by making a physical blend of the described ingredients in a vial, sealing the vial and then heating at 70°C. for 20.5 hours in a forced air oven to provide a reaction product. The ingredients used to make the physical blend were as follows:

Adhesion Additive 1 (AA1) was a reaction product of 11.6 parts of hydroxydimethylsilyl endblocked

poly(dimethylsiloxane) (Polymer 1) having an average of 10 dimethylsiloxane units per molecule, 8.4 parts of

$$(CH_3O)_3SiCH_2CH_2Si(OCH_3)_3$$

(Alkoxy 1) and 0.2 part of tetrabutyltitanate (Titanate).

Adhesion Additive 2 (AA2) was as described for AA1 but the hydroxydimethylsilyl endblocked polydimethylsiloxane was replaced with hydroxymethylvinylsilyl endblocked poly(methylvinylsiloxane) (Polymer 2) having an average of 10 methylvinylsiloxane units per molecule.

Adhesion Additive 3 (AA3) was as described for AA1 but the hydroxydimethylsilyl endblocked poly(dimethylsiloxane) was replaced with hydroxymethylphenylsilyl endblocked poly(methylphenylsiloxane) (Polymer 3) having an average of 8 methylphenylsiloxane units per molecule.

Adhesion Additive 4 (AA4) was prepared as described for AA1 except the amounts of the ingredients reacted were 10 parts Polymer 1, 10 parts Alkoxy 1 and 0.2 part Titanate.

Adhesion Additive 5 (AA5) was prepared as described for AA2 except the amounts of the ingredients reacted were 10 parts Polymer 2, 10 parts Alkoxy 1 and 0.2 part Titanate.

Adhesion Additive 6 (AA6) was prepared as described for AA3 except the amounts of the ingredients reacted were 10 parts Polymer 3, 10 parts Alkoxy 1 and 0.2 part Titanate.

Adhesion Additive 7 (AA7) was prepared as described for AA1 except that 0,1 N potassium hydroxide in ethanol replaced Titanate.

Adhesion Additive 8 (AA8) was prepared as described for AA2 except that 0.1 N potassium hydroxide in ethanol replaced Titanate.

Adhesion Additive 9 (AA9) was prepared as described for AA3 except that 0.1 N potassium hydroxide in ethanol replaced Titanate.

The adhesion of the cured film to the substrate was determined by removing it with a spatula. The results were observed after various aging periods at room temperature. The results obversed were denoted, AF = adhesive failure; WE = adhesive failure with noticeable adhesion; WD = spotty cohesive failure; and CF = cohesive failure. The results observed were as shown in Table I.

TABLE 1

| SUBSTRATE | AMBIENT AGING | ADHESION ADDITIVE 0** | 1 | 2 | 3 | 4 | 5 | 6 | 7 | 8 | 9 |
|---|---|---|---|---|---|---|---|---|---|---|---|
| GLASS | 0 MIN | AF | AF | AF | AF | AF | AF | AF | AF | AF | AF |
| | 60 MIN | AF | AF | AF | AF | WE | AF | AF | AF | AF | AF |
| | 220 MIN | AF | WD | AF | AF | WE | AF | WD | AF | AF | AF |
| | 20 HRS | AF | CF | AF | CF | CF | AF | CF | AF | AF | AF |
| | HEAT AGE* | AF | CF | AF | CF | CF | AF | CF | AF | AF | AF |
| ALUMINUM | 0 MIN | AF | AF | AF | AF | AF | AF | AF | AF | AF | AF |
| | 60 MIN | AF | AF | AF | AF | WE | AF | AF | AF | AF | AF |
| | 220 MIN | AF | CF | AF | AF | CF | AF | CF | AF | AF | AF |
| | 20 HRS | AF | CF | AF | AF | CF | AF | CF | AF | AF | AF |
| | HEAT AGE* | AF | CF | AF | CF | CF | AF | CF | AF | AF | AF |

* HEAT AGE = 1 DAY AT AMBIENT TEMPERATURE AND 30 MINUTES AT 150°C.
**COATING A WITH NO ADHESION ADDITIVE.

The results demonstrate the ability of the adhesion additives of the present invention to impart unprimed, room temperature (ambient) adhesion to an ultraviolet radiation curable siloxane composition. The adhesion improved by aging at room temperature and by heating. The composition and method of preparation of the adhesion additive effects its ability to impart improved adhesion in a specific ultraviolet radiation curable siloxane composition.

AA2 was not as effective in Coating A but gave excellent results in Coating B (see Example 3).

EXAMPLE 2

Ultraviolet radiation curable compositions were prepared by mixing 100 parts of Coating A with 0.5 part of tetrabutyltitanate and 2.5 parts, 5.0 parts, 7.5 parts and 10 parts of AA4 to provide compositions 2a, 2b, 2c and 2d respectively. Ultraviolet radiation curable composition 2e was prepared by mixing 100 parts of Coating A with 0.5 part of tetrabutyltitanate and 5.0 parts of Polymer 1. Ultraviolet radiation curable composition 2f was prepared by mixing 100 parts of Coating A with 0.5 part of tetrabutyltitanate and 5.0 parts of Alkoxy 1. Ultraviolet

radiation curable composition 2g was prepared by mixing 100 parts of Coating A with 0.5 part of tetrabutyltitanate, 2.5 parts of Polymer 1 and 2.5 parts of Alkoxy 1. Ultraviolet radiation curable composition 2 was Coating A without any adhesion additive. These compositions were cured and tested for adhesion as described in Example 1. The results observed were as shown in Table II.

TABLE II

| SUBSTRATE | AMBIENT AGING | CURABLE COMPOSITION 2 | 2a | 2b | 2c | 2d | 2e | 2f | 2g |
|---|---|---|---|---|---|---|---|---|---|
| GLASS | 0 MIN | AF | AF | AF | AF | AF | AF | AF | AF |
| | 60 MIN | AF | AF | AF | AF | CF | AF | CF | WD |
| | 120 MIN | AF | AF | CF | CF | CF | AF | CF | CF |
| | 20 HRS | AF | CF | CF | CF | CF | AF | CF | CF |
| | HEAT AGE* | AF | CF | CF | CF | CF | AF | CF | CF |
| ALUMINUM | 0 MIN | AF | AF | AF | AF | AF | AF | AF | AF |
| | 60 MIN | AF | AF | WD | CF | CF | AF | CF | WD |
| | 120 MIN | AF | AF | CF | CF | CF | AF | CF | CF |
| | 20 HRS | AF | CF | CF | CF | CF | AF | CF | CF |
| | HEAT AGE* | AF | CF | CF | CF | CF | AF | CF | CF |

*HEAT AGE = 1 DAY AT AMBIENT TEMPERATURE AND 30 MINUTES AT 150°C.

The results demonstrate the effect of increasing the concentration of the adhesion additive had on the adhesion. Ultraviolet radiation curable composition 2, 2e, 2f and 2g are provided as comparative and are not within the scope of the present invention.

EXAMPLE 3

An amino functional endblocked polydiorganosiloxane was prepared by adding to a 5-liter, 3-necked flask equipped with a condenser, stirrer and a thermometer, 34.06 g of trimethylsiloxy endblocked polydimethylsiloxane having a viscosity of 2 centistokes and an average formula of

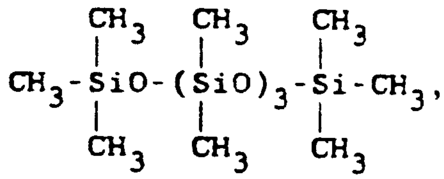

25.34 g of a silane of the formula

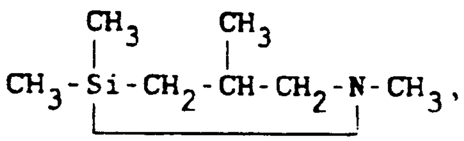

1.60 g of water, 448.34 g of poly(methylphenylsiloxane) cyclics having from 3 to 6 methylphenylsiloxane units per molecule, 2990.67 g of poly(dimethylsiloxane) cyclics having from 3 to 6 dimethylsiloxane units per molecule and 0.77 g of KOH. The resulting mixture was heated at 150°C. for 24 hours, cooled to 57°C. and then neutralized with 1.56 cc of propionic acid. The mixture was stirred for at least 1 hour, the excess propionic acid neutralized with 1.76 g sodium bicarbonate and then stripped to 170°C. at less than 1,3 kPa (10 mm of Hg). To the stripped mixture, 35.4 g of Supercell was added and then the mixture was pressure filtered. The resultant amino functional endblocked polydiorganosiloxane blend had an ANE of 21,380 g/eq, a viscosity of 2,100 mPa·s (centipoise) and an average molecular weight with an $M_w$ of 25,220 and an $M_n$ of 12,850. The amino functional blend is designated Amino-blend A and has the average formula

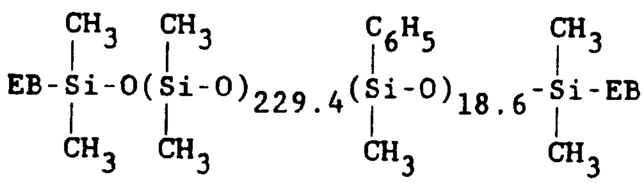

in which EB represents the endblocking in this polymer mixture. The mixture contained according to the calculated values, 25 mole percent of the polymer molecules having two amino functional endblocking groups of the formula

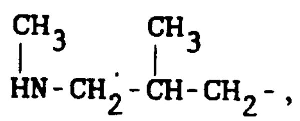

50 mole percent of the polymer molecules having one EB being the amino functional radical as shown above and the other EB group being methyl (non-functional) and 25 mole percent of the polymer molecules being endblocked with methyl (non-functional). Amino-blend A had 50 percent of the endblocking groups as amino functional and 50 percent of the endblocking groups as methyl (non-functional).

Amino-blend B was prepared as described above except the amounts were varied to provide 85 percent of the endblocking groups as amino groups and 15 percent of the endblocking groups as methyl groups. Amino-blend B had an average formula

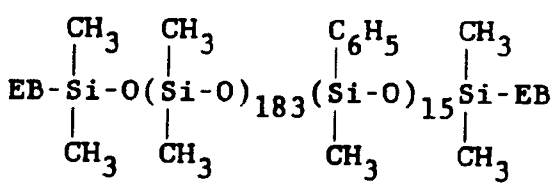

in which EB represents the endblocking in this polymer mixture. The mixture contained according to the calculated values, 72.25 mole percent of the polymer molecules having two amino functional endblocking groups of the formula

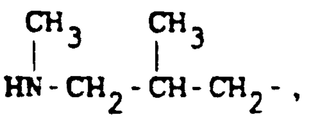

25.5 mole percent of the polymer molecules having one EB being the amino functional radical as shown above and the other EB group being methyl (non-functional), and 2.25 mole percent of the polymer molecules being endblocked with methyl groups (non-functional). Amino-blend B had a viscosity of 6,100 mPa·s (centipoise) as measured with a HAF #3 spindle at 10 rpm on a Brookfield viscometer, an ANE (amine neutralization equivalent) of 10,536 g/eq and an average molecular weight with an $M_w$ of 35,270 and an $M_n$ of 17,170.

An acrylamide functional endblocked polydiorganosiloxane was prepared by adding to a 2-liter, 3-necked flask, 250 g of Amino-blend A, 250 g Amino-blend B, 500 g. heptane and 2.67 g sodium methoxide. The mixture was cooled to 1°C. and then 4.24 g of acryloyl chloride in 80 ml of heptane was added in 62 minutes at which the temperature of the mixture was -1°C. After about one hour, 0.69 g KOH was added. Additional increments of 0.19 g, 0.13 g and 0.43 g KOH was added over about two hours to neutralize the mixture. The mixture was then pressure filtered through a 0.8 micron membrane filter after stirring about 15 minutes with 15 g Supercell. After sitting overnight, 5 cc of the reaction mixture was removed at 23°C. and 2,1 kPa (16 mm of Hg). After sitting overnight, the reaction mixture was filtered through a 0.8 μm membrane filter. The resulting polymer had an ANE (amine neutralization equivalent) of 139,300 g/eq which represented a 90.0% conversion of amine to acrylamide. To the reaction mixture was added 5 g sodium bicarbonate, 5 g calcium carbonate and 10 g Supercell. The resulting mixture was stirred 1.5 hours, filtered through a 0.2 micron membrane filter, added 50 ppm p-methoxyphenol (MEHQ) and 25 ppm phenothiazine and vacuum stripped to 70°C. at less than 2 kPa (15 mm Hg). The resulting product was an acrylamide functional polyorganosiloxane blend where the amine groups of Amino-blend A and Amino-blend B were converted to acrylamide functionality of the formula

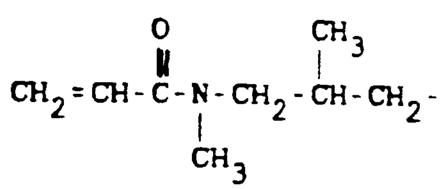

and is designated Acrylamide-blend A which had an ANE of 139,500 g/eq for a 90 conversion of amine to acrylamide and a viscosity of about 4,000 mPa·s (centipoise).

Ultraviolet radiation curable coating (Coating B) was prepared by mixing 100 parts of Acrylamide-blend A with one part of 1-hydroxycyclohexyl phenyl ketone (Irgacure 184, obtained from Ciba-Geigy Corporation, Additives Department, Ardsley, New York, and one part of a zinc naphthenate solution (8 weight percent zinc content in mineral spirits). Ultraviolet radiation curable compositions were prepared by mixing 100 parts of Coating B with 0.5 part of tetrabutyltitanate and 2.5 parts, 5.0 parts, 7.5 parts and 10 parts of AA2 to provide compositions 3a, 3b, 3c and 3d respectively. Ultraviolet radiation curable composition 3e was prepared by mixing 100 parts of Coating B with 0.5 part of tetrabutyltitanate and 5.0 parts of Polymer 2. Ultraviolet radiation curable composition 3f was prepared by mixing 100 parts of Coating B with 0.5 part of tetrabutyltitanate and 5.0 parts of Alkoxy 1. Ultraviolet radiation curable composition 3g was prepared by mixing 100 parts of Coating B with 0.5 part of tetrabutyltitanate, 2.5 parts of Polymer 2 and 2.5 parts of Alkoxy 1. Ultraviolet radiation curable composition 3 was Coating B without adhesion additive. These compositions were cured and the adhesion properties measured as described in Example 1. The results observed were as shown in Table III.

TABLE III

| SUBSTRATE | AMBIENT AGING | 3 | 3a | 3b | 3c | 3d | 3e | 3f | 3g |
|---|---|---|---|---|---|---|---|---|---|
| | | | | | CURABLE COMPOSITION | | | | |
| GLASS | 0 MIN | AF | AF | AF | AF | AF | AF | AF | AF |
| | 60 MIN | AF | WD | WD | WD | WD | AF | WD | WD |
| | 120 MIN | AF | WD | CF | CF | CF | AF | WD | WD |
| | 20 HRS | AF | CF | CF | CF | CF | AF | WD | WD |
| | HEAT AGE* | AF | CF | CF | CF | CF | AF | CF | WD |
| ALUMINUM | 0 MIN | AF | AF | AF | AF | AF | AF | AF | AF |
| | 60 MIN | AF | WD | WD | CF | CF | AF | WD | WD |
| | 120 MIN | AF | WD | CF | CF | CF | AF | CF | WD |
| | 20 HRS | AF | CF | CF | CF | CF | AF | CF | CF |
| | HEAT AGE* | AF | CF | CF | CF | CF | WD | CF | CF |

*HEAT AGE = ONE DAY AT AMBIENT AND 30 MINUTES AT 150°C.

The results demonstrate the effect increasing the concentration of the adhesion additive has on the adhesion. Ultraviolet radiation curable compositions 3, 3e, 3f and 3g are presented as comparative examples and are not within the scope of the present invention. The data demonstrated a pre-reaction of the reactants used to prepare AA2, as compared to a simple physical blend of the ingredients in Composition 3g, gave better adhesion.

EXAMPLE 4

An amino functional endblocked polydiorganosiloxane, Amino-polymer C was prepared as described above except the amounts were varied to provide 44 mole percent of the siloxy groups being phenyl and 56 mole percent of the siloxy groups being methyl. Amino-blend C had an average formula

$$EB-\overset{CH_3}{\underset{CH_3}{Si}}-O(\overset{CH_3}{\underset{CH_3}{Si}}-O)_{222}(\overset{C_6H_5}{\underset{CH_3}{Si}}-O)_{176}\overset{CH_3}{\underset{CH_3}{Si}}-EB$$

in which EB represents the endblocking in this polymer mixture. The mixture contained 100 mole percent of the polymer molecules having two amino functional endblocking groups of the formula

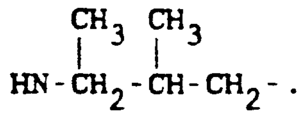

Amino-polymer C had a viscosity of 13,200 mPa·s (centipoise) as measured in accordance with ASTM-D 1084B.

An acrylamide functional polydiorganosiloxane (Acrylamide-polymer B) was prepared by mixing in a 5-liter, 3-necked flask equipped with a stirrer, a condenser, a thermometer and an addition funnel, 800 g of Amino-blend C, 2400 cc of methylene chloride, 30.1 cc of a 2N aqueous sodium hydroxide solution, 40 cc of a 15 weight percent sodium nitrite aqueous solution and 730 cc of water. The temperature was reduced to about 0°C. and 4.3 cc acryloyl chloride in 5 cc of methylene chloride was added to the stirred Amino-blend C mixture. The addition was completed in about 3 minutes and the reaction was continued for 30 minutes while allowing the temperature to warm to room temperature. The resulting mixture was separated into methylene chloride solution and aqueous solution. The aqueous solution was discarded along with three subsequent water washings of the methylene chloride layer. The methylene chloride solution was put into a freezer overnight, removed, filtered through glass wool to remove ice and then neutralized with calcium carbonate by mixing with 0.5 g of calcium carbonate per 10 g of polymer. The resulting mixture was stirred 2 hours, pressure filtered and then the methylene chloride was removed on a rotary evaporator up to 45°C. at less than 1,3 kPa (10 mm of Hg). The resulting product had an average formula

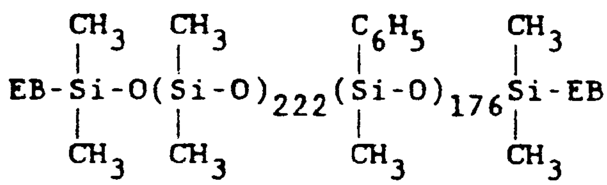

in which EB represents the endblocking in this polymer mixture. The mixture contained 100 mole percent of the polymer molecules having two acrylamide functional endblocking groups of the formula

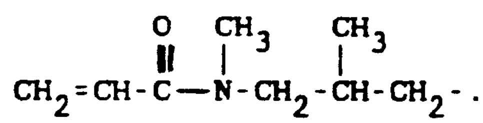

Acrylamide-polymer B had a viscosity of 13,700 mPa·s (centipoise) measured in accordance with ASTM-D 1084B. Coating C was prepared by blending 67 parts of Acrylamide-polymer B, 25 parts of 1,4-butanediol diacrylate, 3 parts of 1-hydroxy- 2-methyl-1-phenylpropan-1-one, 100 ppm of phenothiazine and 100 ppm of the monomethyl ether of hydroquinone.

Ultraviolet radiation curable compositions were prepared by mixing 100 parts of Coating C with 0.5 part of tetrabutyltitanate and 2.5 parts, 5.0 parts, 7.5 parts and 10 parts of AA1 to provide compositions 4a, 4b, 4c and 4d respectively. Ultraviolet radiation curable composition 4e was prepared by mixing 100 parts of Coating C with 0.5 part of tetrabutyltitanate and 5.0 parts of Polymer 1. Ultraviolet radiation curable compositions 4f, 4g, 4h and 4i were prepared by mixing 100 parts of Coating C with 0.5 part of tetrabutyltitanate and 2.5 parts, 5.0 parts, 7.5 parts and 10 parts respectively of Alkoxy 1. Ultraviolet radiation curable composition 4j was prepared by mixing 100 parts of Coating C with 0.5 part of tetrabutyltitanate, 2.5 parts Polymer 1 and 2.5 parts of Alkoxy 1. Ultraviolet radiation curable composition 4 was Coating C without any adhesion additive. Films were cast at 0,20 mm (8 mils) wet thickness, cured and then the adhesion measured as in Example 1. The results observed were as shown in Table IV.

TABLE IV

| SUBSTRATE | AMBIENT AGING | 4 | 4a | 4b | 4c | 4d | 4e | 4f | 4g | 4h | 4i | 4j |
|---|---|---|---|---|---|---|---|---|---|---|---|---|
| | | CURABLE COMPOSITIONS | | | | | | | | | | |
| GLASS | 0 MIN | AF | AF | AF | AF | AF | AF | AF | AF | AF | AF | AF |
| | 60 MIN | AF | WD | WD | WD | WD | AF | WE | WE | WD | WD | WD |
| | 120 MIN | AF | WD | WD | WD | WD | AF | WE | WD | WD | WD | WD |
| | 240 MIN | AF | WD | WD | WD | CF | AF | WD | WD | WD | WD | WD |
| | HEAT AGE* | AF | CF | CF | CF | CF | WD | WD | WD | WD | WD | WD |
| ALUMINUM | 0 MIN | AF | AF | AF | AF | AF | AF | AF | AF | AF | AF | AF |
| | 60 MIN | AF | AF | AF | AF | AF | AF | AF | AF | WE | WD | WD |
| | 120 MIN | AF | AF | AF | AF | AF | AF | AF | AF | WE | WD | WD |
| | 40 MIN | AF | AF | AF | WD | AF | AF | AF | WD | WE | WD | WD |
| | HEAT AGE* | AF | WD | CF | CF | CF | WD | CF | CF | CF | CF | CF |

*HEAT AGE = 4 HOURS AT AMBIENT AND 30 MINUTES AT 150°C.

The results demonstrate the effect increasing the concentration of the adhesion additive has on the adhesion. The results also show the adhesion depends on the substrate. Ultraviolet radiation curable compositions 4, 4e, 4f, 4g, 4h, 4i, and 4j are comparative examples and are not within the scope of the present invention.

EXAMPLE 5

Ultraviolet radiation curable composition 5 was prepared by mixing 95 parts of Coating C with 5 parts of AA1. Samples of the composition were irradiated with ultraviolet radiation at a dosage of about 2 $J/cm^2$ at a wavelength of 250-370 nanometres and an intensity greater than 150 $mW/cm^2$. The composition cured in between 10 and 20 seconds under a 200 watt/inch medium pressure mercury vapor arc lamp housed in a reflector at a height of 7,6 cm (3 inches). This composition was storable in one package for more than six months and had a light yellow hazy appearance with a viscosity between 1500 and 2600 mPa·s (centipoise). The ionic purity was determined and there was less than 2 ppm of sodium and less than 2 ppm potassium. The durometer on the Shore OO scale was 80 and on the Shore A scale was 43. These durometer values did not change more than 5% after 150°C. in an forced air oven for 1,000 hours or after 100 hours in an autoclave at 121°C. at a pressure of 20,6 Pa (2.1 kg/cm$^2$).

EXAMPLE 6

Ultraviolet radiation curable siloxane compositions were prepared by mixing 100 parts of either Coating A or Coating B with 5 parts of an adhesion additive defined below and 0.5 part of tetrabutyltitanate.

The adhesion additives were prepared as described in Example 1 using the ingredients as follows:

Alkoxy 3 was prepared by making a physical blend of 3.36 g of tetramethyldisiloxane,

$$H(CH_3)_2SiOSi(CH_3)_2H,$$

7.4 g of vinyltrimethoxysilane and two drops of a platinum complex of chloroplatinic acid and divinyltetramethyldisiloxane having 0.64 weight percent platinum. The blend was placed in a vial, the vial was sealed and then heated at 70°C. for about 16 hours.

Adhesion Additive 15 (AA15) was prepared as described for AA1 except that Alkoxy 1 was replaced with Alkoxy 3.

Adhesion Additive 16 (AA16) was prepared as described for AA2 except that Alkoxy 1 was replaced with Alkoxy 3.

Adhesion Additive 17 (AA17) was prepared as described for AA3 except that Alkoxy 1 was replaced with Alkoxy 3.

Alkoxy 4 was prepared in the same manner as described for Alkoxy 3 using as the ingredients 6.72 g tetramethyldisiloxane, 16.2 g of allyltrimethoxysilane and 4 drops of the platinum complex.

Adhesion Additive 18 (AA18) was prepared as described for AA1 except that Alkoxy 1 was replaced with Alkoxy 4.

Films of the radiation curable siloxane compositions were cast, cured and the adhesion measured as described in Example 1. The results observed were as shown in Table V.

TABLE V

| SUBSTRATE | AMBIENT AGING | COATING A ADHESION ADDITIVE 0** | 15 | 16 | 17 | 18 | COATING B ADHESION ADDITIVE 0** | 15 | 16 | 17 | 18 |
|---|---|---|---|---|---|---|---|---|---|---|---|
| GLASS | 0 MIN | AF | AF | AF | AF | AF | AF | AF | AF | AF | AF |
| | 60 MIN | AF | AF | AF | AF | AF | AF | AF | AF | AF | AF |
| | 120 MIN | AF | AF | AF | AF | AF | AF | AF | AF | AF | WE |
| | 20 HRS | AF | CF | AF | AF | CF | AF | AF | AF | AF | AF |
| | HEAT AGE* | AF | CF | AF | AF | CF | AF | WE | WE | AF | WD |
| ALUMINUM | 0 MIN | AF | AF | AF | AF | AF | AF | AF | AF | AF | AF |
| | 60 MIN | AF | AF | AF | AF | AF | AF | AF | AF | AF | WE |
| | 120 MIN | AF | AF | AF | AF | AF | AF | AF | WE | AF | WD |
| | 20 HRS | AF | AF | AF | AF | AF | AF | WE | WD | AF | WD |
| | HEAT AGE* | AF | CF | AF | AF | AF | AF | CF | CF | WD | CF |

*HEAT AGE = ONE DAY AT AMBIENT AND 30 MINUTES AT 150°C.
**COATING WITHOUT ANY ADHESION ADDITIVE.

EXAMPLE 7

Coating D was prepared by blending at room temperature in a container which protects the composition from exposure to ultraviolet radiation, until the mixture was homogeneous: 30.2 parts acrylated urethane oligomer, Ebecryl 4883 sold by Radcure Specialties, Virginia, (this material is 85% acrylated urethane oligomer and 15 tripropylene glycol diacrylate); 4.3 parts acrylated urethane prepolymer, Ebecryl 230 sold by Radcure Specialties, Virginia; 28.5 parts dicyclopentenyloxyethyl acrylate, QM-672 sold by Rohm and Haas Company of Pennsylvania; 7.5 parts 2-hydroxyethyl methacrylate, sold as Rocryl 400 by Rohm and Haas Company of Pennsylvania; 13.0 parts alpha-(1-oxo-2-propenyl)-omega-(nonylphenoxy)-poly(oxy-1,2-ethanediyl), M-113 sold by Toagosei Chemical Industry Co., Ltd, of Tokyo, Japan; 4.3 parts trixylenyl phosphate, Kronitex(R) TXP

sold by FMC Corporation, Industrial Chemical Group Pennsylvania; 4.1 parts 2-hydroxy-2-methyl-1-phenyl-propan-1-one, Darocur(R) 1173, sold by EM Chemicals, EM Industries Company, Hawthorne, New York; 2.7 parts Kayamer PM-2, sold by Nippon Kayaku Co., Ltd., Plastic Division, Tokyo, Japan, (this is the mixture of phosphorus materials); 4.3 parts dipentaerythritol monohydroxy pentaacrylate, SR-399, sold by Sartomer Company, Division of Sartomer Industries, Inc., Pennsylvania; 0.009 part Uvitex OB, fluorescent dye; 200 ppm hydroquinone; 200 ppm phenothiazine; and 1.0 part 1,1-bis-(t-butylperoxy)cyclohexane, SP-400P sold by Witco Chemical, U.S. Peroxygen Division, California. The resulting composition was a conformal coating composition which cured both by exposure to ultraviolet radiation and by heating. This mixture had a viscosity of 0.42 Pa·s at 25°C., HAV, spindle number 3, 50 rpm, at 2 minutes.

Coating E was prepared by blending 26.2 parts of hydroxypropyl methacrylate; 13.4 parts trixylenyl phosphate, Kronitex(R) TXP sold by FMC Corporation, Industrial Chemical Group Pennsylvania; 1.6 parts 2-hydroxy-2-methyl-1-phenyl-propan-1-one, Darocur(R) 1173, sold by EM Chemicals, EM Industries Company, Hawthorne, New York; 52.4 parts of an acrylate oligomer which contained about 10 weight percent 2-(2-ethoxyethoxy)ethyl ester of 2-propanoic acid, Novacure 8800, Interez, Inc., Louisville, Kentucky; 1.2 parts 1,1-bis-(t-butylperoxy)cyclohexane, SP-400P, sold by Witco Chemical, U.S. Peroxygen Division, California; and 5.3 parts of reinforcing silica.

Ultraviolet radiation curable compositions were prepared by mixing 100 parts of a coating with 5.0 parts of an adhesion additive and 0.5 part of tetrabutyltitanate. The coatings and adhesion additives were as shown in Table VI. Films were case, cured and the adhesion measured as described in Example 1. The results were as shown in Table VI.

TABLE VI

| | | COATING B | | | |
|---|---|---|---|---|---|
| | | ADHESION ADDITIVE | | | |
| SUBSTRATE | AMBIENT AGING | 0 | AA1 | AA2 | AA3 |
| GLASS | 0 MIN | AF | AF | AF | AF |
| | 60 MIN | AF | AF | CF | AF |
| | 220 MIN | AF | WD | CF | AF |
| | 20 HRS | AF | WD | CF | AF |
| | HEAT AGE* | AF | CF | CF | WD |
| ALUMINUM | 0 MIN | AF | AF | AF | AF |
| | 60 MIN | AF | AF | CF | AF |
| | 220 MIN | AF | WD | CF | AF |
| | 20 HRS | AF | WD | CF | AF |
| | HEAT AGE* | AF | CF | CF | WD |

| | | COATING C | | | |
|---|---|---|---|---|---|
| | | ADHESION ADDITIVE | | | |
| SUBSTRATE | AMBIENT AGING | 0 | AA1 | AA2 | AA3 |
| GLASS | 0 MIN | AF | AF | AF | AF |
| | 60 MIN | AF | AF | AF | AF |
| | 220 MIN | AF | WE | WD | WD |
| | 20 HRS | AF | CF | WD | WD |
| | HEAT AGE* | AF | CF | WD | WD |
| ALUMINUM | 0 MIN | AF | AF | AF | AF |
| | 60 MIN | AF | AF | AF | AF |
| | 220 MIN | AF | AF | AF | AF |
| | 20 HRS | AF | AF | AF | AF |
| | HEAT AGE* | AF | AF | AF | AF |

*HEAT AGE = ONE DAY AT AMBIENT AND 30 MINUTES AT 150°C.

TABLE VI (continued)

| SUBSTRATE | AMBIENT AGING | COATING D ADHESION ADDITIVE 0 | AA1 | AA2 | AA3 |
|---|---|---|---|---|---|
| GLASS | 0 MIN | AF | AF | AF | AF |
| | 60 MIN | AF | AF | AF | AF |
| | 220 MIN | AF | AF | AF | AF |
| | 20 HRS | AF | AF | AF | AF |
| | HEAT AGE* | AF | AF | AF | AF |
| ALUMINUM | 0 MIN | AF | AF | AF | AF |
| | 60 MIN | AF | AF | AF | AF |
| | 220 MIN | AF | AF | AF | AF |
| | 20 HRS | AF | AF | AF | AF |
| | HEAT AGE* | AF | AF | AF | AF |

| SUBSTRATE | AMBIENT AGING | COATING E ADHESION ADDITIVE 0 | AA1 | AA2 | AA3 |
|---|---|---|---|---|---|
| GLASS | 0 MIN | AF | AF | AF | AF |
| | 60 MIN | AF | AF | AF | AF |
| | 220 MIN | AF | AF | AF | AF |
| | 20 HRS | AF | AF | AF | AF |
| | HEAT AGE* | AF | AF | AF | AF |
| ALUMINUM | 0 MIN | AF | AF | AF | AF |
| | 60 MIN | AF | AF | AF | AF |
| | 220 MIN | AF | AF | AF | AF |
| | 20 HRS | AF | AF | AF | AF |
| | HEAT AGE* | AF | AF | AF | AF |

*HEAT AGE = ONE DAY AT AMBIENT AND 30 MINUTES AT 150°C.

The results demonstrate no benefit was obtained through introduction of the adhesion additives into the organic radiation curable compositions. The organic ultraviolet radiation curable compositions are provided as comparative examples and are not within the scope of the present invention.

EXAMPLE 8

Ultraviolet radiation curable compositions were prepared by mixing 100 parts of Coating C with 3.0 parts, 5.0 parts and 7.0 parts of AA1 to provide compositions 8a, 8b and 8c respectively. Ultraviolet radiation curable composition 8 was Coating without any adhesion additive. Films were cast at 0,25 mm (10 mils) wet thickness, cured by exposure to UV radiation and then the adhesion measured as in Example 1. The results observed were as shown in Table VII.

TABLE VII

| SUBSTRATE | AMBIENT AGING | CURABLE COMPOSITIONS 8 | 8a | 8b | 8c |
|---|---|---|---|---|---|
| SILICON NITRIDE | 0 MIN | AF | AF | AF | WE |
| | 30 MIN | AF | AF | AF | WE |
| | 60 MIN | AF | WE | WE | WE |
| | 120 MIN | AF | WE | WE | WD |
| | 20 HRS | AF | WE | WE | WD |
| | HEAT AGE* | AF | WE | WE | WD |
| SILICON DIOXIDE | 0 MIN | AF | AF | AF | WE |
| | 30 MIN | AF | AF | AF | WE |
| | 60 MIN | AF | WE | WE | WE |
| | 120 MIN | AF | WE | WE | WD |
| | 20 HRS | AF | WE | WE | WD |
| | HEAT AGE* | AF | WE | WE | WD |
| COPPER | 0 MIN | AF | AF | AF | AF |
| | 30 MIN | AF | AF | AF | AF |
| | 60 MIN | AF | AF | AF | WE |
| | 120 MIN | AF | AF | AF | WE |
| | 20 HRS | AF | AF | AF | WE |
| | HEAT AGE* | AF | AF | WE | WD |
| POLYIMIDE | 0 MIN | ---- | AF | AF | AF |
| | 30 MIN | ---- | AF | AF | WE |
| | 60 MIN | ---- | AF | AF | WE |
| | 120 MIN | ---- | AF | AF | WE |
| | 20 HRS | ---- | AF | AF | WE |
| | HEAT AGE* | ---- | WE | WE | WD |

*HEAT AGE = 20 HOURS AT AMBIENT AND 30 MINUTES AT 150°C.

## Claims

1. As an adhesion additive for ultraviolet radiation curable siloxane compositions, a reaction product consisting essentially of the material obtained by combining and reacting

(A) an alkoxysilicon compound having a general formula

$$(RO)_3Si\text{-}X\text{-}Si(OR)_3$$

in which R is methyl or ethyl and X is a divalent radical selected from the group consisting of $-(CH_2)_n-$ where n has a value of from 1 to 10 inclusive and

$$-Y-\overset{R'}{\underset{R'}{|}}\!\!\!\!\!Si-O-\overset{R'}{\underset{R'}{|}}\!\!\!\!\!Si-Y-$$

where each R' is independently selected from a group consisting of RO-, an aliphatic hydrocarbon radical and an aromatic hydrocarbon radical and Y is a divalent radical of the formula $-(CH_2)_n-$ where n has a value of from 1 to 10 inclusive and

(B) a polydiorganosiloxane of the formula

$$HO(R''_2SiO)_xH$$

where R" is a monovalent radical independently selected from the group consisting of an aliphatic hydrocarbon radical and aromatic hydrocarbon radical and x has an average value of from 5 to 50,
(C) optionally a catalyst for reaction between a ≡SiOR group of (A) and a hydroxyl group of (B),
where the amounts of (A) and (B) are such that the molar ratio of moles of alkoxy in (A) per mole of hydroxy group in (B) is from 2 to 15.

2. The adhesion additive according to claim 1 in which X is

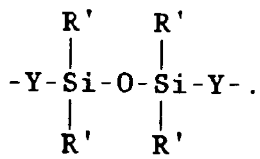

3. An ultraviolet radiation curable siloxane composition comprising
(I) a mixture comprising at least one ultraviolet radiation activatable siloxane polymer which will cure when exposed to ultraviolet radiation by forming a crosslinked product and a photoinitiator which is activated by ultraviolet radiation, and
(II) an adhesion additive for ultraviolet to claim 1.

4. The ultraviolet radiation curable siloxane composition according to claim 3 in which (A) is

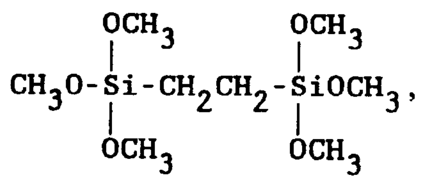

(B) is poly(dimethylsiloxane) and (C) is tetrabutyltitanate.

5. The ultraviolet radiation curable siloxane composition according to claim 3 in which adhesion additive (II) is present in an amount of from 1 to 15 weight percent based on the weight of mixture (I).

**Patentansprüche**

1. Reaktionsprodukt als Haftadditiv für durch Ultraviolettbestrahlung härtbare Siloxanzusammensetzungen, bestehend im wesentlichen aus dem Material, das erhalten wird, indem
(A) eine Alkoxysiliciumverbindung der allgemeinen Formel

$$(RO)_3Si\text{-}X\text{-}Si(OR)_3 ,$$

worin R ein Methyl- oder Ethylrest ist und X ein divalenter Rest ausgewählt aus der Gruppe bestehend aus $-(CH_2)_n-$, worin n einen Wert von 1 bis einschließlich 10 hat und

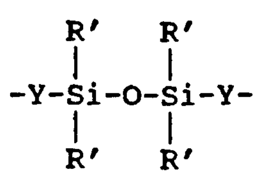 ,

worin jeder Rest R' unabhängig ausgewählt ist aus der Gruppe bestehend aus RO-, einem aliphatischen Kohlenwasserstoffrest und einem aromatischen Kohlenwasserstoffrest und Y ein divalenter Rest der Formel $-(CH_2)_n-$ ist, worin n einen Wert von 1 bis einschließlich 10 hat, ist,
(B) ein Polydiorganosiloxan der Formel

$$HO(R''_2SiO)_xH$$

ist, worin R" ein monovalenter Rest ist, der unabhängig ausgewählt ist aus der Gruppe bestehend aus

einem aliphatischen Kohlenwasserstoffrest und einem aromatischen Kohlenwasserstoffrest und x einen Durchschnittswert von 5 bis 50 hat,

(C) gegebenenfalls ein Katalysator fur die Reaktion zwischen einer ≡SiOR-Gruppe von (A) und einer Hydroxylgruppe von (B)

vereinigt und umgesetzt wird, wobei die Mengen von (A) und (B) so sind, daß das Molverhältnis von Molen Alkoxygruppen in (A) pro Mol Hydroxygruppen in (B) 2 bis 15 ist.

2. Haftadditiv nach Anspruch 1, worin X

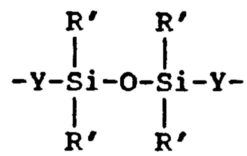

ist.

3. Durch Ultraviolettbestrahlung härtbare Siloxanzusam- mensetzung, umfassend

(I) eine Mischung umfassend mindestens ein durch Ultraviolettbestrahlung aktivierbares Siloxanpolymer, das, wenn es Ultraviolettbestrahlung ausgesetzt wird, härtet unter Bildung eines vernetzten Produktes, und einen Photoinitiator, der durch Ultraviolettbestrahlung aktiviert wird, und

(II) ein Haftadditiv nach Anspruch 1.

4. Durch Ultraviolettbestrahlung härtbare Siloxanzusam- mensetzung nach Anspruch 3, worin (A)

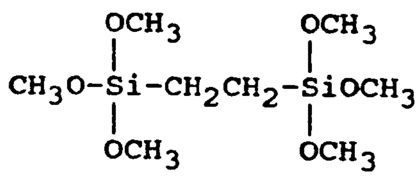

ist, (B) Poly(dimethylsiloxan) ist und (C) Tetrabutyltitanat ist.

5. Durch Ultraviolettbestrahlung härtbare Siloxanzusam- mensetzung nach Anspruch 3, worin das Haftadditiv (II) in einer Menge von 1 bis 15 Gew.-%, bezogen auf das Gewicht der Mischung (I), vorhanden ist.

## Revendications

1. En tant qu'additif d'adhésion pour compositions de siloxanes durcissable sous l'action du rayonnement ultra- violet, un produit de réaction constitué essentiellement de la matière obtenue en combinant et en faisant réagir

(A) un composé alcoxysilicié de formule générale

$$(RO)_3Si\text{-}X\text{-}Si(OR)_3$$

dans laquelle R est un radical méthyle ou éthyle et X est un radical bivalent choisi dans le groupe constitué par $-(CH_2)_n-$ où n a une valeur allant de 1 à 10 compris et

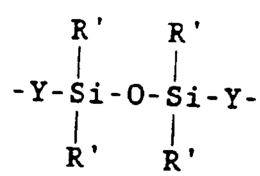

où chaque R' est choisi indépendamment dans un groupe constitué par RO-, un radical hydrocarboné aliphatique et un radical hydrocarboné aromatique et Y est un radical bivalent de formule $-(CH_2)_n-$ où

n a une valeur allant de 1 à 10 compris et
(B) un polydiorganosiloxane de formule

$$HO(R''_2SiO)_xH$$

où R" est un radical monovalent choisi indépendamment dans le groupe constitué par un radical hydrocarboné aliphatique et un radical hydrocarboné aromatique et x a une valeur moyenne allant de 5 à 50,
(C) facultativement, un catalyseur pour la réaction entre un groupe ≡SiOR de (A) et un groupe hydroxyle de (B), où les quantités de (A) et de (B) sont telles que le rapport molaire du nombre de moles de groupes alcoxy dans (A) par mole de groupes hydroxy dans (B) est de 2 à 15.

**2.** Additif d'adhésion selon la revendication 1 où X représente

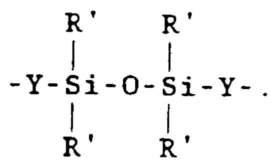

**3.** Composition de siloxanes durcissable sous l'action du rayonnement ultra-violet comprenant
(I) un mélange comprenant au moins un polymère de siloxane activable sous l'action du rayonnement ultra- violet qui durcit, lorsqu'on l'expose au rayonnement ultra- violet, en formant un produit réticulé, et un photoinitiateur qui est activé par le rayonnement ultra- violet, et
(II) un additif d'adhésion selon la revendication 1.

**4.** Composition de siloxanes durcissable sous l'action du rayonnement ultra-violet selon la revendication 3 où (A) est

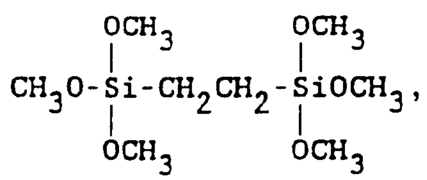

(B) est un poly(diméthylsiloxane) et (C) est le titanate de tétrabutyle.

**5.** Composition de siloxanes durcissable sous l'action du rayonnement ultra-violet selon la revendication 3 dans laquelle l'additif d'adhésion est présent en une quantité allant de 1 à 15 % en poids sur la base du poids du mélange (I).